(19) Europäisches Patentamt / European Patent Office / Office européen des brevets

(11) **EP 3 133 708 B1**

(12) **EUROPEAN PATENT SPECIFICATION**

(45) Date of publication and mention
of the grant of the patent:
**13.09.2017 Bulletin 2017/37**

(51) Int Cl.:
***H02J 3/14*** *(2006.01)*

(21) Application number: **16175867.7**

(22) Date of filing: **23.06.2016**

(54) **GROUP CONTROL METHOD AND GROUP CONTROL APPARATUS**

GRUPPENSTEUERUNGSVERFAHREN UND GRUPPENSTEUERUNGSVORRICHTUNG

PROCÉDÉ DE COMMANDE DE GROUPE ET APPAREIL DE COMMANDE DE GROUPE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2015 JP 2015152744**

(43) Date of publication of application:
**22.02.2017 Bulletin 2017/08**

(73) Proprietor: **Panasonic Intellectual Property
Management Co., Ltd.
Osaka 540-6207 (JP)**

(72) Inventors:
• **WATANABE, Kenichi
Osaka, 540-6207 (JP)**
• **SUGIMOTO, Takahiro
Osaka, 540-6207 (JP)**

(74) Representative: **Eisenführ Speiser
Patentanwälte Rechtsanwälte PartGmbB
Postfach 10 60 78
28060 Bremen (DE)**

(56) References cited:
**EP-A1- 2 648 142     EP-A1- 2 760 098
EP-A1- 2 876 766**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

1. Technical Field

The present disclosure relates to a group control method and for grouping electric appliances into control groups and controlling the electric power of the electric appliances for each control group.

2. Description of the Related Art

Heretofore, a technology disclosed in Japanese Unexamined Patent Application Publication No. 2013-176284 (hereinafter referred to as Patent Document 1) has been available as a technology related to a method for controlling the electric power of electric appliances.

In the related technology, however, there are cases in which the electric power is not appropriately controlled and the control accuracy deteriorates.

SUMMARY

One non-limiting and exemplary embodiment provides a group control method for appropriately controlling the electric power of a plurality of electric appliances.

In one general aspect, the techniques disclosed here feature a group control method for grouping electric appliances into control groups and controlling electric power of the electric appliances for each control group in a predetermined control period. The method is defined in claim 1.

It should be noted that general or specific embodiments may be implemented as a system, an apparatus, a device, an integrated circuit, a computer program, a computer-readable compact disc read-only memory (ROM), or a non-transitory storage medium, or any selective combination thereof.

A group control method and so on according to one aspect of the present disclosure makes it possible to appropriately control the electric power of a plurality of electric appliances.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE DRAWINGS

FIG. 1 is a block diagram illustrating the configuration of an electric-power control system in a first embodiment;
FIG. 2 is a block diagram illustrating the configuration of a group control apparatus in the first embodiment;
FIG. 3 is a flowchart illustrating the operation of the group control apparatus in the first embodiment;
FIG. 4 is a table illustrating one example of a result of grouping in the first embodiment;
FIG. 5 is a block diagram illustrating the configuration of a group control apparatus in a second embodiment;
FIG. 6 is a flowchart illustrating the operation of the group control apparatus in the second embodiment;
FIG. 7 is a flowchart illustrating an amount-of-electric-power-control calculation processing in the second embodiment;
FIG. 8 is a block diagram illustrating the configuration of a group control apparatus in a third embodiment;
FIG. 9A is a table illustrating one example of a result of control in a reference example; and
FIG. 9B is a table illustrating one example of a result of control in the first embodiment and so on.

DETAILED DESCRIPTION

(Findings Underlying Present Disclosure)

The present inventors have found that, in the related technology noted above in the background described above, there are cases in which the electric power is not appropriately controlled and the control accuracy deteriorates. A specific description will be given below.

The battery control system disclosed in Patent Document 1 classifies a plurality of batteries into a plurality of groups on the basis of characteristics (e.g., communication delay times) of communication channels between the batteries and the battery control system. The battery control system then selects, as a battery for adjustment, a battery that is included in a group using a communication channel within a predetermined battery characteristic range (e.g., a group in which the communication delay time is shorter than or equal to a predetermined value) and that falls within a predetermined communication characteristic range. This suppresses deterioration of the accuracy of adjustment between the electric power to be supplied and the electric power to be consumed.

In Patent Document 1, however, even when a battery (a power storage apparatus) whose communication delay time is short is selected and an instruction value is successfully transmitted in a short period of time, there are cases in which a power storage apparatus installed at a consumer facility cannot perform charging/discharging according to the instruction value, owing to various constrains on the power storage apparatus. Consequently, the control accuracy can deteriorate. Thus, it is difficult to apply the technology in Patent Document 1 to controlling a power storage apparatus installed at a consumer facility.

Accordingly, one aspect of the present disclosure provides a group control method for grouping electric appliances into control groups and controlling electric power of the electric appliances for each control group in a predetermined control period. The method includes: obtaining characteristics of each of the electric appliances; calculating a controllable electric energy of each of the electric appliances, based on the characteristics of the electric appliance, grouping the electric appliances into the control groups; and determining, for each of the control groups, a control period at which the electric power of one or more electric appliances included in the control group is periodically controlled, wherein, in the determining, when an amounts of controllable electric energy for a first control group of the control groups is larger than an amounts of controllable electric energy for a second control group of the control groups, the control period for the first control group is set to be shorter than the control period for the second control group.

With this arrangement, since a short control period is assigned to the control group in which the amount of controllable electric energy is large, the electric power can be significantly changed in a short period. Accordingly, the control accuracy improves. Also, since the control period is determined for each control group, the peak amount of communication used for the control is reduced, and the occurrence of a communication failure is suppressed. That is, the group control method described above makes it possible to appropriately control the electric power of electric appliances.

For example, an amounts of controllable electric energy for the first control group may be an amounts of controllable electric energy of one or more power storage apparatuses among one or more electric appliances included in the first control group; and the amounts of controllable electric energy for the second control group may be an amounts of controllable electric energy of one or more power storage apparatuses among one or more electric appliances included in the second control group.

With this arrangement, a short control period is assigned to the control group in which the amount of controllable electric energy for the power storage apparatuses is large. Since the response time of each power storage apparatus is short, the electric power can be significantly changed in a short period of time. Accordingly, the control accuracy further improves.

For example, in the calculating of the amount of controllable electric energy, two calculation expressions that differ from each other between reduction control that is control for reducing electric power to be supplied from an electric power system to the electric appliances and increase control that is control for increasing electric power to be supplied from the electric power system to the electric appliances may be selectively used to calculate the amount of controllable electric energy of each electric appliance that is included in the electric appliances and that is to be controlled.

With this arrangement, the amount of controllable electric energy corresponding to a case in which the electric power to be received is increased and the amount of controllable electric energy corresponding to a case in which the electric power to be received is reduced are calculated. Based on the amounts of controllable electric energy corresponding to the two cases, the control periods are appropriately determined.

For example, when the electric appliance to be controlled is a power storage apparatus included in the electric appliances, a remaining capacity of the power storage apparatus, a rated output capacity of the power storage apparatus, an available capacity of the power storage apparatus, and a rated input capacity of the power storage apparatus may be obtained as the characteristics of the power storage apparatus, a minimum value of the remaining capacity, the output rated capacity, and an amount of electric power consumed by a consumer having the power storage apparatus may be calculated as the amount of controllable electric energy of the power storage apparatus in the reduction control, and a minimum value of the available capacity and the rated input capacity may be calculated as the amount of controllable electric energy of the power storage apparatus in the increase control.

With this arrangement, the amount of controllable electric energy corresponding to a case in which the electric power to be controlled is increased and the amount of controllable electric energy corresponding to a case in which the electric power to be controlled is reduced are appropriately calculated for the power storage apparatus. For example, in the power storage apparatus in which the remaining capacity is large, the amount of controllable electric energy when the electric power to be received is reduced can be calculated to be large, and the amount of controllable electric energy when the electric power to be received is increased can be calculated to be small. Accordingly, the control accuracy improves.

For example, when the electric appliance to be controlled is a load apparatus included in the electric appliances, an amount of electric power consumed by the load apparatus, a first amount of electric power consumption, and a second amount of electric power consumption may be obtained as the characteristics of the load apparatus, the first amount of electric power consumption being a predetermined amount of electric power consumption of the load apparatus and being larger than or equal to the amount of electric power consumed by the load apparatus, and the second amount of electric power consumption being a predetermined amount of electric power consumption of the load apparatus and being smaller than or equal to the amount of electric power consumed by the load apparatus, a difference between the amount of electric power consumed by the load apparatus and the second amount of electric power consumption may be calculated as the amount of controllable electric energy of the load apparatus in the reduction control, and a difference between the amount of electric power consumed by the load apparatus and the first amount of electric power consumption may be calculated as the amount of controllable electric energy of the load apparatus in the increase control.

With this arrangement, the amount of controllable electric energy corresponding to a case in which the electric power to be received is increased and the amount of controllable electric energy corresponding to a case in which the electric power to be received is reduced are appropriately calculated for the load apparatus.

For example, the electric appliances may include a first power storage apparatus, a second power storage apparatus, a third power storage apparatus, and a fourth power storage apparatus; and in the grouping of the electric appliances, when each of the amount of controllable electric energy of the first power storage apparatus and the amount of controllable electric energy of the second power storage apparatus is larger than the amount of controllable electric energy of the third power storage apparatus and is larger than the amount of controllable electric energy of the fourth power storage apparatus, the first power storage apparatus and the second power storage apparatus may be grouped into one control group, and the third power storage apparatus and the fourth power storage apparatus may be grouped into another control group.

As a result of the grouping, an imbalance of the amounts of controllable electric energy between the power storage apparatuses is reduced in each control group. This allows the control period to be set and controlled according to the amount of controllable electric energy of the power storage apparatuses.

For example, in the grouping of the electric appliances, of the electric appliances, all of one consumer's electric appliances may be grouped into one control group.

This makes it possible to report instruction values for the electric appliances together for each consumer. Thus, it is possible to simplify the report processing.

For example, in the grouping of the electric appliances, of the electric appliances, load apparatuses of consumers each having only one or more load apparatuses may be grouped into one control group.

With this grouping, electric appliances having the same characteristic are grouped together, and an appropriate control period is determined for the electric appliances having the same characteristic.

For example, in the grouping of the electric appliances, with respect to each of the control groups, a control start time at which control on the electric power of one or more electric appliances included in the control group is started may be determined, and when the control period for the first control group is shorter than the control period for the second control group, the control start time for the first control group may be set to be earlier than the control start time for the second control group.

With this arrangement, the number of times the control is performed can be increased for the control group in which the amount of controllable electric energy is large and the control period is short. Accordingly, the control accuracy improves.

For example, in the grouping of the electric appliances, with respect to each of the control groups, a control start time at which control on the electric power of one or more electric appliances included in the control group is started may be determined, and the control start time for the control group including only one or more load apparatuses among the electric appliances may be made to match a start time of the predetermined electric-power service providing period.

With this arrangement, a base portion of a deviation from the target value can be controlled by the load apparatus, and the remaining portion can be controlled by the power storage apparatus, thus making it possible to reduce the amount of charging/discharging and the number of controls of the power storage apparatus. Accordingly, deterioration of the power storage apparatus is suppressed.

For example, the group control method may further include: excluding, from the electric appliances, each electric appliance whose electric power is not controlled. In the grouping of the electric appliances, the electric appliances from which each electric appliance whose electric power is not controlled is excluded may be grouped into the control groups.

With this arrangement, each electric appliance whose electric power is not controlled is excluded in the grouping of the electric appliances. Thus, it is not necessary to transmit an instruction value to each electric appliance whose amount of controllable electric energy is 0, thus reducing the amount of processing.

For example, each electric appliance excluded from the electric appliances may be an electric appliance whose response time to electric power control is longer than a predetermined response time requested by an electric power service in the predetermined electric-power service providing period.

With this arrangement, each electric appliance whose response time is long is excluded as the electric appliance whose electric power is not controlled, thus reducing the amount of processing.

For example, each electric appliance excluded from the electric appliances may be an electric appliance whose amount of controllable electric energy is 0.

With this arrangement, each electric appliance whose amount of controllable electric energy is 0 is excluded as the electric appliance whose electric power is not controlled, thus reducing the amount of processing.

For example, the group control method may further include calculating, with respect to each of the electric appliances, the amount of electric power to be controlled for the electric appliance as an instruction value. In the calculating of the amount of electric power to be controlled, a common amount of electric power to be controlled may be calculated for the power storage apparatuses included in one control group.

As a result, the calculation processing for the amount of electric power to be controlled is simplified. Similar control may also be executed on the power storage apparatuses included in the control group.

For example, the group control method may further include reporting, to each of the electric appliances, the amount of electric power to be controlled for the electric appliance at a report time defined by the control period for the control group including the electric appliance. In the reporting of the amount of electric power to be controlled, in a case in which the report time for a first electric appliance of the electric appliances and the report time for a second electric appliance of the electric appliances are equal to each other, when (i) the amount of controllable electric energy of the first electric appliance is larger than the amount of controllable electric energy of the second electric appliance or (ii) a response time to control on the electric power of the first electric appliance is shorter than a response time to control on the electric power of the second electric appliance, the amount of electric power to be controlled for the first electric appliance may be reported to the first electric appliance, and then the amount of electric power to be controlled for the second electric appliance may be reported to the second electric appliance.

With this arrangement, the electric power for each electric appliance whose amount of processable electric power is large or each electric appliance those response time is short is controlled earlier. Accordingly, a delay is suppressed, and the control accuracy improves.

For example, the group control method may further include reporting, to each of the electric appliances, the amount of electric power to be controlled for the electric appliance at a report time defined by the control period for the control group including the electric appliance. In the reporting of the amount of electric power to be controlled, a report time defined by the control period for the first control group and a report time defined by control period for the second control group may be equal to each other, and the amounts of controllable electric energy for the first control group may be larger than the amounts of controllable electric energy for the second control group, the amount of electric power to be controlled for each of one or more electric appliances included in the first control group may be reported to the electric appliance, and then the amount of electric power to be controlled for each of one or more electric appliances included in the second control group may be reported to the electric appliance.

With this arrangement, the electric power for the control group in which the amount of processable electric power is large is controlled earlier. Accordingly, a delay is suppressed, and the control accuracy improves.

It should be noted that general or specific embodiments may be implemented as a system, an apparatus, a device, an integrated circuit, a computer program, a computer-readable CD-ROM, or a non-transitory storage medium, or any selective combination thereof.

Embodiments will be described below with reference to the accompanying drawings. The embodiments described below each represent a general or specific example. Numerical values, shapes, materials, constituent elements, the arrangement and connection of constituent elements, steps, the order of steps, and so on described in the embodiments below are examples, and are not intended to limit the present disclosure. Of the constituent elements in the embodiments described below, the constituent elements not set forth in the independent claims that represent the broadest concept will be described as optional constituent elements.

The amount of electric power generally means a summation value of electric power in a predetermined time and corresponds to energy. Also, the electric power (power) and the amount of electric power (energy) correspond to each other. Thus, herein, electric power may be used to mean the amount of electric power (energy), and the amount of electric power may be used to mean electric power (power). The electric power and the amount of electric power may also mean the values thereof.

The expression "charging/discharging" corresponds to at least one of charging and discharging. Also, the expression "input/output" corresponds to at least one of input and output. A rating means a pre-defined upper limit. The input may mean charging, and the output may mean discharging.

(First Embodiment)

In a first embodiment, a description will be given of a group control apparatus for grouping a plurality of electric appliances into a plurality of control groups and controlling the electric power of the electric appliances for each control group in a predetermined electric-power service providing period.

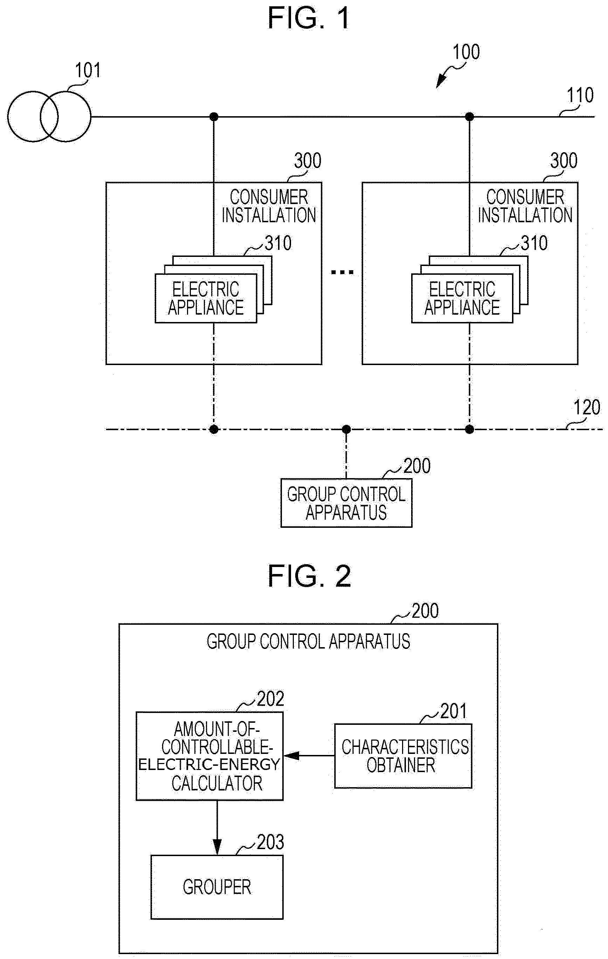

FIG. 1 is a block diagram illustrating an electric-power control system including a group control apparatus in the present embodiment. As illustrated in FIG. 1, an electric-power control system 100 in the present embodiment includes a power distribution transformer 101, a power distribution line 110, one or more consumer installations 300, a communication line 120, and a group control apparatus 200.

In order to supply electric power, supplied from an electric power system, to each consumer installation 300 or each electric appliance 310, the power distribution transformer 101 transforms the voltage of the electric power supplied from the electric power system into an appropriate voltage. The power distribution transformer 101 is, for example, a transformer in a distribution substation, a pole-mounted transformer, or a cubicle in an apartment building. In the electric-power control system 100, the power distribution transformer 101 is not an essential constituent element.

The power distribution line 110 is an electric power line for providing electrical a connection between the power distribution transformer 101 and each consumer installation 300 and for supplying electric power from the power distribution transformer 101 to each consumer installation 300.

The consumer installations 300 are installed at facilities of consumers. In FIG. 1, the consumer installations 300 are illustrated for the consumers, respectively. Each consumer installation 300 has an electric appliance 310. Each consumer installation 300 may have a plurality of electric appliances 310. Each consumer may be a high-voltage consumer, a low-voltage consumer, or the like. A communication protocol of the consumer installations 300 is not limiting.

Each electric appliance 310 is a load apparatus, a power storage apparatus, or a power generation apparatus. That is, the consumer installations 300 include a load apparatus, a power storage apparatus, or a power generation apparatus as the electric appliance 310. The load apparatus may simply be referred to as a "load". Each of the power storage apparatus and the power generation apparatus is an example of a distributed power supply. Thus, each electric appliance 310 may be classified into a load or a distributed power supply.

The load apparatus is an electric appliance 310 that consumes electric power among the electric appliances 310 of the consumers and is a home electric appliance or the like. For example, the amount of electric power consumed by a controllable load apparatus is adjusted upon a shutdown based on an instruction value, a setting change, a mode change, or the like. The controllable load apparatus may have a communicator for receiving an instruction value and a controller for changing the electric power to be consumed. The controllable load apparatus is, specifically, an air conditioner, a heat-pump water heater, or the like.

Each consumer installation 300 may also have an uncontrollable load apparatus. The uncontrollable load apparatus is a load apparatus whose power consumption cannot be changed according to an instruction value. For example, the uncontrollable load apparatus does not have a communicator for receiving an instruction value and a controller for changing the amount of electric power to be consumed. The uncontrollable load apparatus is, specifically, a dryer or the like.

The power storage apparatus stores electric power supplied from the electric power system, another electric appliance 310 (a power generation apparatus), or the like. The power storage apparatus also discharges and supplies electric power to another electric appliance 310 in the consumer installation 300 including a power storage apparatus. When a predetermined environment condition is satisfied, the power storage apparatus may discharge and supply electric power to the electric power system. The power storage apparatus also includes a storage battery, an inverter, and so on. The inverter performs alternating-current/direct-current (AC/DC) conversion during charging of the storage battery. The inverter also performs DC/AC conversion during discharging of the storage battery.

The power generation apparatus also generates electric power and supplies the generated electric power to another electric appliance 310 (the load apparatus or power storage apparatus) or the like. For example, in accordance with an instruction value, the power generation apparatus can change the amount of electric power to be generated and output. The power generation apparatus may also include a communicator for receiving an instruction value and a controller for changing the amount of electric power to be generated and output. The power generation apparatus is, specifically, a fuel cell, a gas engine, or the like. Each of the consumer installations 300 may include a power generation apparatus in which the amount of electric power to be generated and output depends on natural energy, like the photovoltaic generation apparatus.

The consumer installation 300 does not necessarily have to have all the load apparatus, the power storage apparatus, and the power generation apparatus and may include one of the apparatuses.

The communication line 120 is a communication line for providing a connection between each electric appliance 310 (or each consumer installation 300) and the group control apparatus 200 so that they can communicate with each other. The communication line 120 is realized by, for example, a wired LAN (local area network) that conforms to the IEEE 802.3 standard or the like, a wireless LAN that confirms to the IEEE 802.11a, b, g standard or the like, or a public communication channel, such as a mobile-phone channel.

The group control apparatus 200 groups the electric appliances 310 into a plurality of control groups in order to control the electric power of the electric appliances 310 for each control group. Also, with respect to each of the electric appliances 310, the group control apparatus 200 also calculates an amount of controllable electric energy of the electric appliance 310, based on the characteristics of the electric appliance 310. The group control apparatus 200 also determines a control period (a control period) for each control group, based on the amount of controllable electric energy or the like.

The electric power of each electric appliance 310 is at least one of electric power input to the electric appliance 310 and electric power output from the electric appliance 310.

FIG. 2 is a block diagram illustrating the configuration of the group control apparatus 200 illustrated in FIG. 1. As illustrated in FIG. 2, the group control apparatus 200 includes a characteristics obtainer 201, an amount-of-controllable electric energy calculator 202, and a grouper 203.

The characteristics obtainer 201 obtains characteristics of each electric appliance 310 and transmits the characteristics to the amount-of-controllable electric energy calculator 202.

For example, when the electric appliance 310 is a power storage apparatus, the characteristics obtainer 201 obtains an inverter rating, a remaining capacity, an available capacity, a rated storage battery capacity, a maximum charging/discharging rate, a rated input capacity, a rated output capacity, and so on as the characteristics of the electric appliance 310. Since the values of the inverter rating, the rated storage battery capacity, the maximum charging/discharging rate, the rated input capacity, the rated output capacity, and so on are not basically changed, the values may be pre-stored in a storage unit (not illustrated) of the group control apparatus 200. The characteristics obtainer 201 may read those values from the storage unit.

Also, for example, when the electric appliance 310 is a load apparatus, the characteristics obtainer 201 obtains the amount of electric power consumed by the electric appliance 310, a predetermined maximum amount of electric power consumed by the electric appliance 310, a predetermined minimum amount of electric power consumed by the electric appliance 310, and so on as the characteristics of the electric appliance 310.

For example, when the electric appliance 310 is a power generation apparatus, the characteristics obtainer 201 obtains the amount of electric power output from the electric appliance 310, a predetermined maximum amount of electric power output from the electric appliance 310, a predetermined minimum amount of electric power output from the electric appliance 310, and so on as the characteristics of the electric appliance 310. Also, when the power generation apparatus performs system interconnection by using the inverter, the characteristics obtainer 201 may obtain the inverter rating as the characteristics of the electric appliance 310.

Thus, the characteristics obtained by the characteristics obtainer 201 include both static information and dynamic information.

The amount-of-controllable electric energy calculator 202 calculates an amount of controllable electric energy of the electric appliance 310 in accordance with the characteristics of the electric appliance 310. A method for the calculation is described later in detail.

The grouper 203 groups the electric appliances 310 into a plurality of control groups. The grouper 203 also determines a control period for each control group. A method for the grouping will be described later in detail.

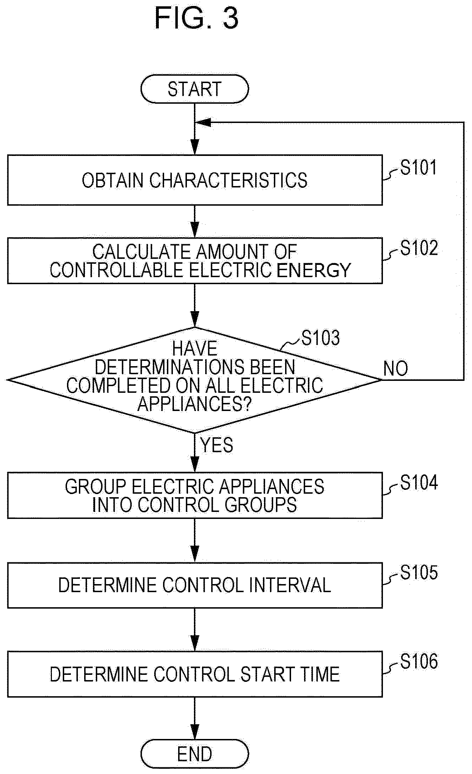

FIG. 3 is a flowchart illustrating the operation of the group control apparatus 200 illustrated in FIG. 2. In accordance with the operation illustrated in FIG. 3, the group control apparatus 200 groups the electric appliances 310 into a plurality of control groups.

First, in step S101, the characteristics obtainer 201 obtains the characteristics of each electric appliance 310.

Next, in step S102, the amount-of-controllable electric energy calculator 202 calculates an amount of controllable electric energy of the electric appliance 310.

For example, with respect to each load apparatus among the electric appliances 310, the amount-of-controllable electric energy calculator 202 calculates an amount of controllable electric energy which is to be used in control for reducing electric power to be supplied from the electric power system to the electric appliances 310, in accordance with equation (1):

$$\text{Amount of controllable electric energy}_i = \text{Amount of electric power consumption}_i - \text{First amount of electric power consumption}_i \qquad (1)$$

In equation (1), i is an identifier for identifying the corresponding load apparatus. The amount of electric power consumption $_i$ is the amount of electric power consumed by the load apparatus at the present point in time. The amount of electric power consumption may be an average amount of electric power consumed by the load apparatus $_i$. The first amount of electric power consumption $_i$ is a predetermined amount of electric power consumption of the load apparatus $_i$ and is smaller than or equal to the amount of electric power consumed by the load apparatus $_i$. Specifically, the first

amount of electric power consumption $_i$ is the amount of electric power consumed, for example, after the load apparatus $_i$ is shut down or its setting is changed. The first amount of electric power consumption $_i$ may be a predetermined minimum amount of electric power consumption of the load apparatus $_i$.

That is, the amount of controllable electric energy $_i$ in equation (1) is the amount of reducible electric power in the amount of electric power consumption $_i$ and is the amount of electric power that can be adjusted in the direction in which the amount of electric power consumption$_i$ decreases.

Also, for example, with respect to each load apparatus among the electric appliances 310, the amount-of-controllable electric energy calculator 202 calculates an amount of controllable electric energy which is to be used in control for increasing electric power to be supplied from the electric power system to the electric appliances 310, in accordance with:

$$\text{Amount of controllable electric energy }_i = \text{Second amount of electric power consumption }_i - \text{Amount of electric power consumption }_i \qquad (2)$$

In equation (2), i is an identifier for identifying the corresponding load apparatus, as in equation (1). The amount of electric power consumption $_i$ is the amount of electric power consumed by the load apparatus $_i$ at the present point in time. The amount of electric power consumption $_i$ may be an average amount of electric power consumed by the load apparatus $_i$. The second amount of electric power consumption $_i$ is a predetermined amount of electric power consumption of the load apparatus $_i$ and is larger than or equal to the amount of electric power consumed by the load apparatus $_i$. Specifically, the second amount of electric power consumption $_i$ is the amount of electric power consumed, for example, after the load apparatus $_i$ is started up or its setting is changed. The second amount of electric power consumption $_i$ may be a predetermined maximum amount of electric power consumption of the load apparatus $_i$.

That is, the amount of controllable electric energy $_i$ in equation (2) is the amount of increasable electric power in the amount of electric power consumption $_i$ and is the amount of electric power that can be adjusted in the direction in which the amount of electric power consumption $_i$ increases.

Also, for example, with respect to each power storage apparatus among the electric appliances 310, the amount-of-controllable electric energy calculator 202 calculates an amount of controllable electric energy which is to be used in the control for reducing the electric power to be supplied from the electric power system to the electric appliances 310, in accordance with:

$$\text{Amount of controllable electric energy }_i = \min (\text{Remaining capacity }_i, \text{ Rated output capacity }_i) \qquad (3)$$

In equation (3), i is an identifier for identifying the corresponding power storage apparatus. The remaining capacity $_i$ is the remaining capacity of the power storage apparatus $_i$ and is, specifically, the remaining capacity of the storage battery in the power storage apparatus $_i$. The rated output capacity $_i$ is the rated output capacity of the power storage apparatus ; and is an amount pre-defined for the power storage apparatus $_i$ as the amount of electric power that can be output in a predetermined unit time. That is, the amount of controllable electric energy $_i$ in equation (3) is the amount of electric power that can be discharged from the power storage apparatus $_i$ and is the amount of adjustable electric power for discharging of the power storage apparatus $_i$.

The rated output capacity $_i$ in equation (3) may be based on the rating of the inverter in the power storage apparatus $_i$ or may be based on the rated capacity and the maximum discharging rate of the storage battery in the power storage apparatus $_i$. For example, equation (3) may be transformed into:

$$\text{Amount of controllable electric energy }_i = \min (\text{Remaining capacity }_i, \text{ Inverter rating }_i \times 1h, \text{ Rated storage battery capacity }_i \times \text{Maximum storage battery discharging rate }_i) \qquad (4)$$

In equation (4), the inverter rating $_i$ is the rating (upper limit) of DC/AC conversion of the inverter in the power storage apparatus $_i$. The rated storage battery capacity $_i$ is the rated capacity of the storage battery in the power storage apparatus $_i$ and is the amount of electric power that can be accumulated in the storage battery. The maximum storage battery discharging rate $_i$ is the maximum discharging rate of the storage battery in the power storage apparatus $_i$.

Also, for example, with respect to each power storage apparatus among the electric appliances 310, the amount-of-controllable electric energy calculator 202 calculates an amount of controllable electric energy which is to be used in the control for increasing the electric power to be supplied from the electric power system to the electric appliances 310, in accordance with:

$$\text{Amount of controllable electric energy}_i = \min(\text{Available capacity}_i, \text{Rated input capacity}_i) \quad (5)$$

In equation (5), $i$ is an identifier for identifying the corresponding power storage apparatus. The available capacity $_i$ is the available capacity of the power storage apparatus $_i$ and is, specifically, a difference between the rated capacity and the remaining capacity of the storage battery in the power storage apparatus $_i$. The rated input capacity $_i$ is the rated input capacity of the power storage apparatus $_i$ and is an amount pre-defined for the power storage apparatus $_i$ as the amount of electric power that can be input in a predetermined unit time. That is, the amount of controllable electric energy $_i$ in equation (5) is the amount of electric power with which the power storage apparatus $_i$ can be charged and is the amount of adjustable electric power for charging of the power storage apparatus $_i$.

The rated input capacity $_i$ in equation (5) may be based on the rating of the inverter in the power storage apparatus $_i$ or may be based on the rated capacity and the maximum charging rate of the storage battery in the power storage apparatus $_i$. For example, equation (5) may be transformed into:

$$\text{Amount of controllable electric energy}_i = \min(\text{Rated storage battery capacity}_i - \text{Remaining capacity}_i, \text{Inverter rating}_i \times 1h, \text{Rated storage battery capacity}_i \times \text{Maximum storage battery charging rate}_i) \quad (6)$$

In equation (6), the rated storage battery capacity $_i$ is the rated capacity of the storage battery in the power storage apparatus $_i$ and is the amount of electric power that can be accumulated in the storage battery in the power storage apparatus $_i$. The inverter rating $_i$ is the rating (upper limit) of AC/DC conversion of the inverter in the power storage apparatus $_i$. The maximum storage battery charging rate $_i$ is the maximum charging rate of the storage battery in the power storage apparatus $_i$.

Instead of using equation (3), the amount-of-controllable electric energy calculator 202 may calculate the amount of controllable electric energy for the power storage apparatus in accordance with:

$$\text{Amount of controllable electric energy}_i = \min(\text{Remaining capacity}_i, \text{Rated output capacity}_i, \text{Amount of electric power consumption}_i) \quad (7)$$

When equation (3) is used, the characteristics obtainer 201 may obtain the amount of electric power consumed by each consumer (the consumer installations 300).

For example, there is a case in which the amount of electric power discharged from a power storage apparatus of a consumer is prohibited from exceeding the amount of electric power consumed by the consumer. In such a case, the amount of controllable electric energy is appropriately calculated through use of equation (7). Equation (7) may also be transformed into:

$$\text{Amount of controllable electric energy}_i = \min(\text{Remaining capacity}_i, \text{Inverter rating}_i \times 1h, \text{Rated storage battery capacity}_i \times \text{Maximum storage battery discharging rate}_i, \text{Amount of electric power consumption}_i) \quad (8)$$

For example, with respect to each power generation apparatus that is a generator with a primer mover among the electric appliances 310, the amount-of-controllable electric energy calculator 202 calculates an amount of controllable electric energy which is to be used in the control for reducing the electric power to be supplied from the electric power system to the electric appliances 310, in accordance with:

$$\text{Amount of controllable electric energy }_i = \text{First amount of output electric}$$

$$\text{power }_i - \text{Amount of output electric power }_i \qquad (9)$$

The generator with a primer mover is a power generation apparatus that generates electric power by using an internal combustion engine, similarly to a gas engine generator or a gas turbine generator.

In equation (9), i is an identifier for identifying the corresponding power generation apparatus. The first amount of output electric power $_i$ is a predetermined amount of output electric power of a power generation apparatus $_i$ and is a predetermined amount of power consumption that is larger than or equal to the amount of electric power output from the power generation apparatus $_i$ For example, the first amount of output electric power$_i$ is a predetermined maximum amount of electric power output from the power generation apparatus $_i$. The amount of output electric power $_i$ is the amount of electric power output from the power generation apparatus $_i$ at the present point in time. The amount of output electric power $_i$ may be an average amount of electric power output from the power generation apparatus $_i$.

That is, the amount of controllable electric energy $_i$ in equation (9) is the amount of increasable electric power in the amount of output electric power $_i$ and is the amount of electric power that can be adjusted in the direction in which the amount of output electric power $_i$ increases.

The first amount of output electric power in equation (9) may be based on the rating of the inverter in the power generation apparatus. For example, equation (9) may be transformed into:

$$\text{Amount of controllable electric energy }_i = (\text{Inverter rating }_i - \text{Output electric}$$

$$\text{power value }_i) \times 1\text{h} \qquad (10)$$

In equation (10), the inverter rating $_i$ is the rating (upper limit) of DC/AC conversion of the inverter in the power generation apparatus $_i$. The output electric power value $_i$ is the output electric power value (instantaneous value) of the power generation apparatus $_i$ at the present point in time. The output electric power value $_i$ may be an average value of electric power output from the power generation apparatus $_i$.

Also, for example, with respect to each power generation apparatus that is a generator with a primer mover among the electric appliances 310, the amount-of-controllable electric energy calculator 202 calculates an amount of controllable electric energy which is to be used in the control for increasing the electric power to be supplied from the electric power system to the electric appliances 310, in accordance with:

$$\text{Amount of controllable electric energy }_i = \text{Amount of output electric power }_i -$$

$$\text{Second amount of output electric power }_i \qquad (11)$$

In equation (11), i is an identifier for identifying the corresponding power generation apparatus, as in equation (9). The second amount of output electric power $_i$ is a predetermined amount of output electric power of the power generation apparatus $_i$ and is a predetermined amount of power consumption that is smaller than or equal to the amount of electric power output from the power generation apparatus $_i$. For example, the second amount of output electric power $_i$ is a predetermined minimum amount of electric power output from the power generation apparatus $_i$. The amount of output electric power $_i$ is the amount of electric power output from the power generation apparatus $_i$ at the present point in time. The amount of output electric power $_i$ may be an average amount of electric power output from the power generation apparatus $_i$.

That is, the amount of controllable electric energy $_i$ in equation (11) is the amount of reducible electric power in the amount of output electric power $_i$ and is the amount of electric power that can be adjusted in the direction in which the amount of output electric power $_i$ decreases.

Also, for example, with respect to each power generation apparatus that is a photovoltaic generation apparatus among the electric appliances 310, the amount-of-controllable electric energy calculator 202 calculates an amount of controllable electric energy which is to be used in the control for increasing the electric power to be supplied from the electric power system to the electric appliances 310, in accordance with:

$$\text{Amount of controllable electric energy}_i = \text{Amount of output electric power}_i$$

$$(12)$$

In equation (12), i is an identifier for identifying the corresponding power generation apparatus. The amount of output electric power $_i$ is the amount of electric power output from the power generation apparatus $_i$ at the present point in time. The amount of output electric power $_i$ may be an average amount of electric power output from the power generation apparatus $_i$.

That is, the amount of controllable electric energy $_i$ in equation (12) is the amount of reducible electric power in the amount of output electric power $_i$ and is the amount of electric power that can be adjusted in the direction in which the amount of output electric power $_i$ decreases.

On the other hand, with respect to each power generation apparatus that is a photovoltaic generation apparatus among the electric appliances 310, the amount-of-controllable electric energy calculator 202 sets 0 for the amount of controllable electric energy which is to be used in the control for reducing the electric power to be supplied from the electric power system to the electric appliances 310.

In the above description, the amount of controllable electric energy which is to be used in the control (the reduction control) for reducing the electric power to be supplied from the electric power system to the electric appliances 310 and the amount of controllable electric energy which is to be used in the control (the increase control) for increasing the electric power to be supplied from the electric power system to the electric appliances 310 are calculated independently of each other.

The amount-of-controllable electric energy calculator 202 may calculate each of the amount of controllable electric energy for the reduction control and the amount of controllable electric energy for the increase control as a final amount of controllable electric energy. Alternatively, the amount-of-controllable electric energy calculator 202 may calculate one of the amount of controllable electric energy for the reduction control and the amount of controllable electric energy for the increase control as a final amount of controllable electric energy. Alternatively, the amount-of-controllable electric energy calculator 202 may calculate a total of the amount of controllable electric energy for the reduction control and the amount of controllable electric energy for the increase control as a final amount of controllable electric energy.

The amount of controllable electric energy for the increase control may be represented with a plus sign being added thereto, and the amount of controllable electric energy for the reduction control may be represented with a minus sign being added thereto.

The group control apparatus 200 may also obtain the characteristics of the electric appliances 310 for each consumer (the consumer installation 300) to calculate amounts of controllable electric energy of the electric appliances 310. Also, after obtaining the characteristics of all the electric appliances 310 of all the consumers, the group control apparatus 200 may calculate amounts of controllable electric energy of all the electric appliances 310.

Next, in step S103, the amount-of-controllable electric energy calculator 202 determines whether or not the amounts of controllable electric energy of all the electric appliances 310 have been calculated. If the amounts of controllable electric energy of all the electric appliances 310 have not been calculated (NO in step S103), the group control apparatus 200 returns to the process in step S101. If the amounts of controllable electric energy of all the electric appliances 310 have been calculated (YES in step S103), the group control apparatus 200 advances to a process in step S104.

If some of the amounts of controllable electric energy of the electric appliances 310 do not need to be calculated, the group control apparatus 200 may advance to the process in step S104, even when the amounts of controllable electric energy of all the electric appliances 310 are not calculated.

Next, in step S104, the grouper 203 groups (classifies) the electric appliances 310 into a plurality of control groups. The grouper 203 may group the electric appliances 310 into a plurality of control groups on the basis of the amounts of controllable electric energy. The control groups which are to be used in the control for reducing the electric power to be supplied from the electric power system to the electric appliances 310 and the control groups which are to be used in the control for increasing the electric power to be supplied from the electric power to the electric appliances 310 may differ from each other. That is, each electric appliance 310 may belong to both the control group for reducing the electric power and the control group for increasing the electric power from the electric power system.

For example, the grouper 203 groups power storage apparatuses whose amounts of controllable electric energy are large into one control group and groups power storage apparatuses whose amounts of controllable electric energy are small into one control group. Also, for example, the grouper 203 groups the electric appliances 310 of one consumer into one control group. For example, the grouper 203 groups load apparatuses of consumers having only the load apparatuses into one control group.

In addition, for example, the grouper 203 may sequentially group the electric appliances 310 in descending order of the amounts of controllable electric energy. More specifically, the grouper 203 may group electric appliances 310 whose amounts of controllable electric energy are large into one control group and group electric appliances 310 whose amounts of controllable electric energy are small into another control group. For example, the total number of electric appliances 310 included in one control group may be limited to a predetermined number or less, based on communications traffic.

In step S105, the grouper 203 determines a control period for each control group. For example, when the amounts of controllable electric energy for a first control group is larger than the amounts of controllable electric energy for a second control group, the grouper 203 sets the control period for the first control group to be shorter than the control period for the second control group. Alternatively, in this case, the grouper 203 may set the control period for the first control group to be equal to the control period for the second control group.

Also, for example, when the amounts of controllable electric energy for the first control group is smaller than the amounts of controllable electric energy for the second control group, the grouper 203 may set the control period for the first control group to be longer than the control period for the second control group. When the amounts of controllable electric energy for the first control group is the same as the amounts of controllable electric energy for the second control group, the grouper 203 may set the control period for the first control group to be the same as the control period for the second control group.

For example, when the amounts of controllable electric energy for the first control group is larger than or equal to the amounts of controllable electric energy for the second control group, the grouper 203 may set the control period for the first control group to be shorter than or equal to the control period for the second control group.

The amount(s) of controllable electric energy of one or more power storage apparatuses in a control group may be used as the amounts of controllable electric energy for a control group. The amount value may be a total value. The grouper 203 may also determine, for the control group, two control periods that differ from each other between the control for reducing the electric power to be supplied from the electric power system to the electric appliances 310 and the control for increasing the electric power to be supplied from the electric power system to the electric appliances 310.

The grouper 203 does not necessarily have to set the control period for one control group to be constant in an electric-power service providing period and may set the last half of the control period in the electric-power service providing period to be shorter than the first half of the control period. This makes it possible to enhance the control accuracy.

In step S106, the grouper 203 determines a control start time for each control group. For example, the grouper 203 brings the control start time for a control group having a small control period close to the start time of the electric-power service providing period. Also, for example, the grouper 203 makes the control start time for a control group including only load apparatuses match the start time of the electric-power service providing period. When the control start times of all the appliances are set to the same time, the process in step S106 may be omitted.

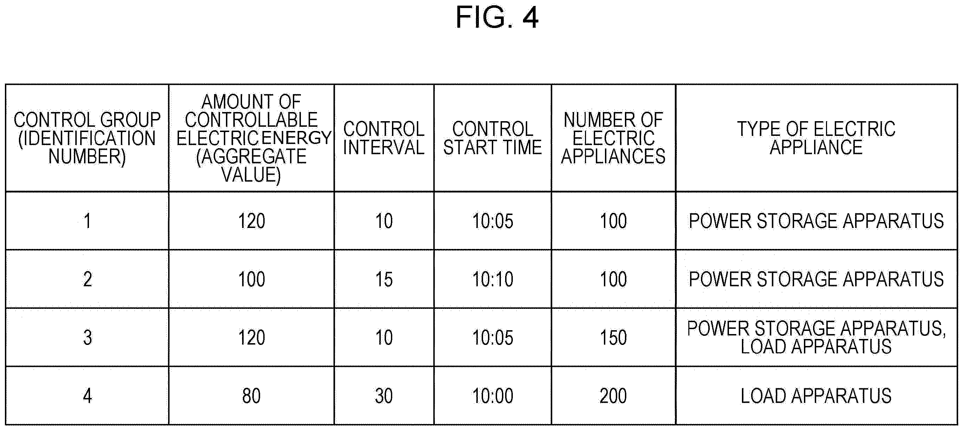

FIG. 4 is a table illustrating one example of a result of the grouping in the present embodiment. In this example, the electric-power service providing period is one hour from 10:00 to 11:00. The unit of the amounts of controllable electric energy (the amounts of controllable electric energy) in FIG. 4 is, for example, kW or kWh. The unit of the control periods in FIG. 4 is, for example, a minute.

In the example illustrated in FIG. 4, the grouper 203 in the group control apparatus 200 generates four control groups. The control group with an identification number 1 includes power storage apparatuses. The amount of controllable electric energy for this control group is large. The control period for this control group is determined to be 10 minutes, and the control start time for this control group is determined to be 10:05.

The control group with an identification number 2 includes power storage apparatuses. The amount of controllable electric energy for this control group is small. The control period for this control group is determined to be 15 minutes, and the control start time for this control group is determined to be 10:10.

The control group with an identification number 3 includes a plurality of power storage apparatuses and load apparatuses. The control period for this control group is determined to be 10 minutes, and the control start time for this control group is determined to be 10:05.

In addition, the control group with an identification number 4 includes only load apparatuses. The control period for this control group is determined to be 30 minutes, and the control start time for this control group is determined to be 10:00.

As illustrated in FIG. 4, a short control period is assigned to a control group in which the amount of controllable electric energy is large. Thus, the electric power can be significantly changed in a short period of time. In addition, since the control period is determined for each control group, the peak amount of communication used for the control is reduced, and the occurrence of a communication failure is suppressed.

Each amount of controllable electric energy in FIG. 4 represents the amounts of controllable electric energy of all the electric appliances 310 included in the corresponding control group. However, the amount of controllable electric energy in FIG. 4 may represent the amounts of controllable electric energy of all the power storage apparatuses among all the electric appliances 310 included in the corresponding control group. For example, in the control group with the identification number 3, when the amount of controllable electric energy of the power storage apparatuses is 90, and the amount of controllable electric energy of the load apparatuses is 30, the amount of controllable electric energy for the control group with the identification number 3 is 90. Thus, the control period for the control group with the identification number 3 is longer than or equal to the control period for the control group with the identification number 2.

(Second Embodiment)

In a second embodiment, a description will be given of a group control apparatus that calculates an amount of electric power to be controlled for each electric appliance. Constituent elements that are the same as or similar to those in the first embodiment described above are denoted by the same reference numerals, and detailed descriptions thereof may be omitted.

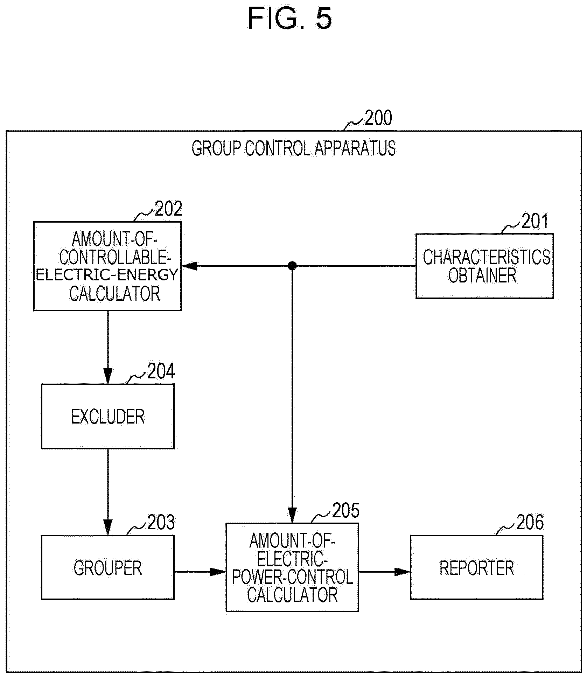

FIG. 5 is a block diagram illustrating the configuration of a group control apparatus in the present embodiment. Constituent elements that are the same as or similar to those described above and illustrated in FIG. 2 are denoted by the same reference numerals, and detailed descriptions thereof may be omitted.

As illustrated in FIG. 5, a group control apparatus 200 includes a characteristics obtainer 201, an amount-of-controllable electric energy calculator 202, a grouper 203, an excluder (extractor) 204, an amount-of-electric-power-control calculator 205, and a reporter 206.

The characteristics obtainer 201 obtains the amounts of power consumed by the load apparatuses among the electric appliances 310, the amounts of electric power with which the power storage apparatuses among the electric appliances 310 are charged and/or the amounts of electric power discharged therefrom, and the amounts of electric power output from the power generation apparatuses among the electric appliances 310. The characteristics obtainer 201 then transmits the obtained amounts to the amount-of-electric-power-control calculator 205.

By extracting the controllable electric appliances 310 from the electric appliances 310, the excluder (extractor) 204 excludes, from the electric appliances 310, the electric appliances 310 that are not controlled. The excluder 204 transmits the extracted electric appliances 310 and the amounts of controllable electric energy thereof to the grouper 203. That is, the excluder 204 transmits, to the grouper 203, information about the electric appliances 310 from which the electric appliances 310 that are not controlled are excluded and the amounts of controllable electric energy of the electric appliances 310 from which the electric appliances 310 that are not controlled are excluded.

The grouper 203 generates control groups by grouping the electric appliances 310 from which the electric appliances 310 that are not controlled are excluded into the control groups. The grouper 203 then transmits information about the generated plurality of control groups to the amount-of-electric-power-control calculator 205.

The amount-of-electric-power-control calculator 205 calculates, as a total amount of electric power to be controlled, the difference between the total amount of electric power received by the electric appliances 310 and a target amount of electric power to be received thereby.

The amount-of-electric-power-control calculator 205 then allocates the total amount of electric power to be controlled to the electric appliances 310. For example, the amount-of-electric-power-control calculator 205 allocates the total amount of electric power to be controlled to the control groups and assigns the same amount of electric power to be controlled to each of the electric appliances 310 in each control group. The amount-of-electric-power-control calculator 205 may also allocate the total amount of electric power to be controlled to the electric appliances 310, based on the characteristics obtained by the characteristics obtainer 201 or the like.

The reporter 206 transmits the amount of electric power to be controlled, the amount being calculated by the amount-of-electric-power-control calculator 205, to the electric appliances 310.

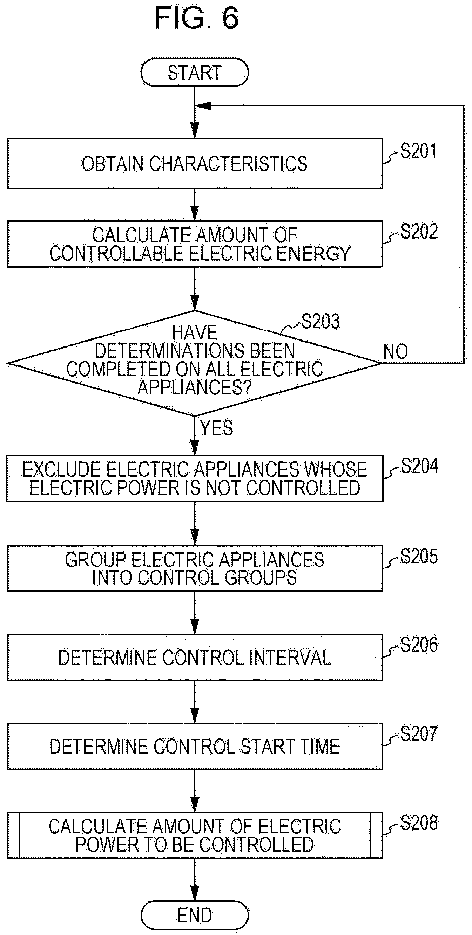

FIG. 6 is a flowchart illustrating the operation of the group control apparatus 200 illustrated in FIG. 5. In accordance with the operation illustrated in FIG. 6, the group control apparatus 200 generates a plurality of control groups and calculates an amount of electric power to be controlled.

Processes in steps S201 to S203 in FIG. 6 are substantially the same as the processes in steps S101 to S103 in FIG. 3.

In step S204, by extracting the controllable electric appliances 310, the excluder 204 excludes, from the electric appliances 310, the electric appliances 310 that are not controlled.

For example, the excluder 204 excludes each electric appliance 310 whose response time is longer than a response time requested by an electric power service. In this case, the response time is, for example, a time obtained by adding a communication time to overhead until the electric appliance 310 starts operating upon receiving an instruction value. The excluder 204 may also exclude each electric appliance 310 for which the amount of controllable electric energy calculated by the amount-of-controllable electric energy calculator 202 is 0.

The excluder 204 may also exclude the electric appliances 310 of a consumer that prohibits remote control. The excluder 204 may also exclude the power storage apparatuses of each consumer 300 that include a photovoltaic generation apparatus. The excluder 204 may also exclude a power storage apparatus of a consumer that prohibits double power generation (using both a photovoltaic generation apparatus and a power storage apparatus or the like). The excluder 204 may also exclude the power storage apparatuses among the consumer installations 300 including a photovoltaic generation apparatus that outputs electric power.

Processes in steps S205 to S207 in FIG. 6 are substantially the same as the processes in steps S104 to S106 in FIG. 3. The processes in step S205 and the subsequent steps are performed on the extracted electric appliances 310 (i.e., the electric appliances 310 from which the electric appliances that are not controlled are excluded.

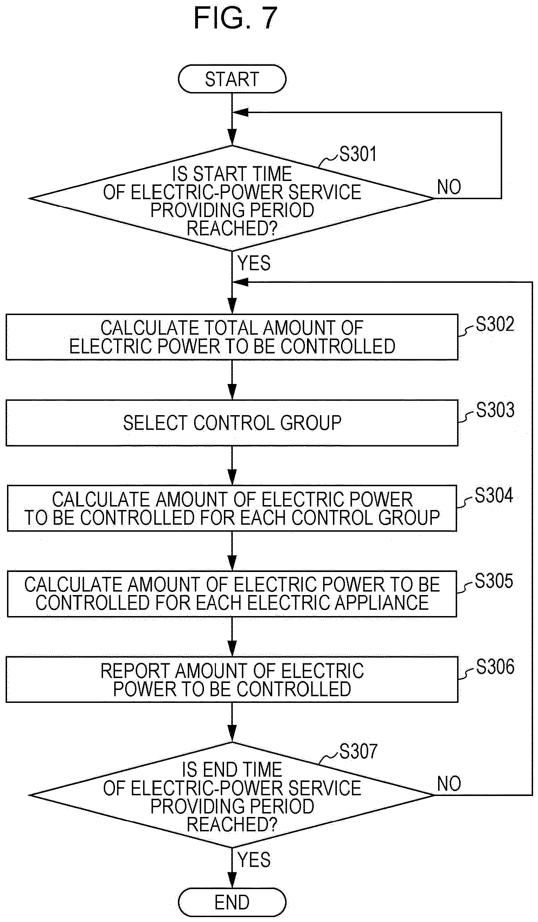

In step S208, the amount-of-electric-power-control calculator 205 calculates an amount of electric power to be controlled for each electric appliance 310. The reporter 206 then transmits the amount of electric power to be controlled, the amount being calculated by the amount-of-electric-power-control calculator 205, to the corresponding electric appliance 310. Details of step S208 will be described below with reference to FIG. 7.

FIG. 7 is a flowchart illustrating details of the amount-of-electric-power-control calculation processing (step S208) illustrated in FIG. 6.

In step S301, the amount-of-electric-power-control calculator 205 determines whether or not the current time is the start time of the electric-power service providing period. If the current time is the start time (YES in step S301 ), the amount-of-electric-power-control calculator 205 continuously performs the subsequent processing. If the current time is not the start time (NO in step S301), the amount-of-electric-power-control calculator 205 waits for the start time.

In step S302, the amount-of-electric-power-control calculator 205 calculates a total amount of electric power to be controlled, for example, by using:

$$\text{Total amount of electric power to be controlled} = \text{Total amount of received electric power} - \text{Target amount of electric power to be received} \qquad (13)$$

In equation (13), the total amount of received electric power is the amount of electric power that the electric appliances 310 receive from the electric power system as a whole. The total amount of received electric power may be an actual value, a predicted value, or the total value of an actual value and a predicted value. The amount-of-electric-power-control calculator 205 may calculate a total amount of received electric power, based on the amounts of electric power consumed by load apparatuses, the amounts of electric power the power storage apparatuses are charged and/or the amounts of electric power discharged therefrom, and the amounts of electric power output from the power generation apparatuses. The target amount of electric power to be received is a target value pre-defined as the amount of electric power that the electric appliances 310 receive from the electric power system as a whole.

When the total amount of electric power to be controlled is larger than 0, control for reducing the electric power to be supplied from the electric power system to the electric appliances 310 is performed. On the other hand, when the total amount of electric power to be controlled is smaller than 0, control for increasing the electric power to be supplied from the electric power system to the electric appliances 310 is performed.

Information about the electric-power service providing period may be pre-stored in the storage unit (not illustrated in FIG. 5) or may be obtained from the outside via the reporter 206.

In step S303, the amount-of-electric-power-control calculator 205 selects the control group used for control from among the control groups generated by the grouper 203. For example, the amount-of-electric-power-control calculator 205 selects the control group on the basis of the control period.

In step S304, the amount-of-electric-power-control calculator 205 calculates an amount of electric power to be controlled for each control group, for example, in accordance with:

$$\text{Amount of electric power to be controlled for control group}_i = \frac{\text{Aggregate value of amounts of controllable electric power for control group}_i}{\sum \text{Aggregate value of amounts of controllable electric power for control group}_i} \times \text{Total amount of electric power to be controlled}$$

$$(14)$$

In equation (14), i is an identifier for identifying the corresponding control group. Equation (14) is one example, and an optimization scheme or the like may be used.

In step S305, the amount-of-electric-power-control calculator 205 calculates an amount of electric power to be controlled for each electric appliance 310. The amount-of-electric-power-control calculator 205 allocates, for example, the same amount of electric power to be controlled to each of the electric appliances 310 in the control group.

The amount-of-electric-power-control calculator 205 may allocate the amount of electric power to be controlled to the electric appliances 310 in the control group in accordance with the characteristics obtained by the characteristics obtainer 201 or the amount of controllable electric energy calculated by the amount-of-controllable electric energy calculator 202. Specifically, in accordance with the characteristics or the amount of controllable electric energy, the amount-of-electric-power-control calculator 205 may proportionally allocate the amount of electric power to be controlled to each of the electric appliances 310 in the control group.

In step S306, the reporter 206 reports (transmits) the amount of electric power to be controlled, the amount being calculated by the amount-of-electric-power-control calculator 205, to the corresponding electric appliance 310. The reporter 206 reports the amounts of electric power to be controlled, the amounts being calculated by the amount-of-electric-power-control calculator 205, for example, in descending order of the amounts of controllable electric energy calculated by the amount-of-controllable electric energy calculator 202. The reporter 206 may also report the amounts of electric power to be controlled, the amounts being calculated by the amount-of-electric-power-control calculator 205, for example, in ascending order of response times.

Each electric appliance 310 operates in accordance with the reported amount of electric power to be controlled. For example, when the electric appliance 310 is a power storage apparatus, the electric appliance 310 performs charging/discharging in accordance with the reported amount of electric power to be controlled. When the electric appliance 310 is a load apparatus, the electric appliance 310 starts up, shuts down, or changes its operation mode in accordance with the reported amount of electric power to be controlled. When the electric appliance 310 is a power generation apparatus, the electric appliance 310 changes the amount of electric power to be output, in accordance with the reported amount of electric power to be controlled.

In step S307, the amount-of-electric-power-control calculator 205 determines whether or not the current time is the end time of the electric-power service providing period. If the current time is the end time (YES in step S307), the amount-of-electric-power-control calculator 205 ends the processing. If the current time is not the end time (NO in step S307), the amount-of-electric-power-control calculator 205 repeats the processing from step S302.

In accordance with the above-described configuration and operation, the group control apparatus 200 in the present embodiment can allocate the amount of electric power to be controlled to the electric appliance 310 and can report the allocated amount of electric power to be controlled. The group control apparatus 200 can also exclude each electric appliance 310 that is not controlled. Accordingly, the group control apparatus 200 can appropriately control the electric power of the electric appliances 310.

(Third Embodiment)

In a third embodiment, a description will be given of a group control apparatus connected to an electric-power control apparatus. Constituent elements that are the same as or similar to those in the first or second embodiment described above are denoted by the same reference numerals, and detailed descriptions thereof may be omitted.

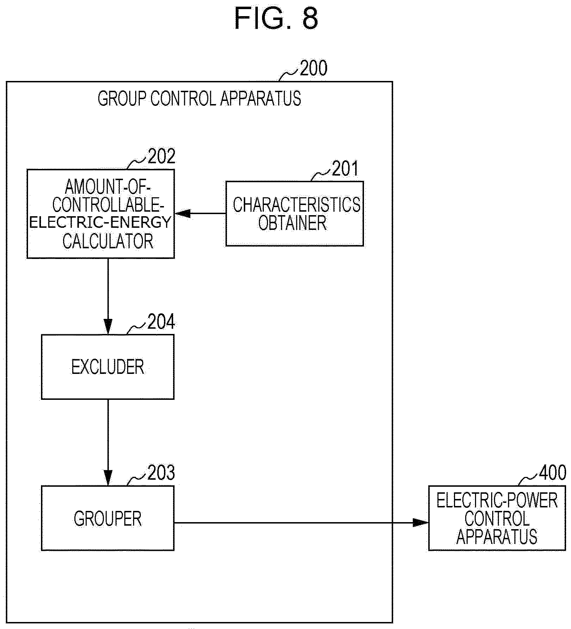

FIG. 8 is a block diagram illustrating the configuration of a group control apparatus in the present embodiment. Constituent elements that are the same as or similar to those described above and illustrated in FIGS. 2 and 5 are denoted by the same reference numerals, and detailed descriptions thereof may be omitted.

As illustrated in FIG. 8, a group control apparatus 200 includes a characteristics obtainer 201, an amount-of-controllable electric energy calculator 202, a grouper 203, and an excluder 204. In FIG. 8, the amount-of-electric-power-control calculator 205 and the reporter 206 illustrated in FIG. 5 are included in an electric-power control apparatus 400 different from the group control apparatus 200 (the amount-of-electric-power-control calculator 205 and the reporter 206 are not illustrated in the electric-power control apparatus 400).

FIG. 8 shows that the group control apparatus 200 can generate control groups without using the calculation system for the amount-of-electric-power-control calculator 205 and the group control apparatus 200 can be provided independently from the electric-power control apparatus 400.

The group control apparatus 200 in the present embodiment can appropriately generate control groups by using the above-described configuration. In addition, the group control apparatus 200 can appropriately control the electric power of the electric appliances 310 via the electric-power control apparatus 400.

(Comparative Example)

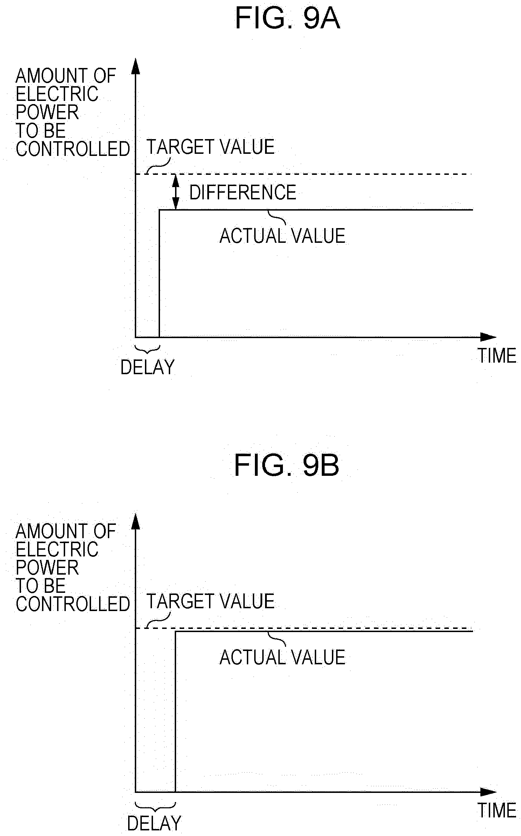

FIG. 9A is a graph illustrating one example of a result of control in a reference example. In FIG. 9A, the horizontal axis represents time, and the vertical axis represents electric power corresponding to the amount of electric power to be controlled. In FIG. 9A, for simplicity of description, the response time of the electric appliance is regarded as 0. For battery control like that in Patent Document 1, the delay time decreases, as illustrated in FIG. 9A.

However, there is a possibility that the target value of the amount of electric power to be controlled and the actual value of the amount of electric power to be controlled have a relatively large difference therebetween, owing to constrains on the control on the electric power of the electric appliances installed at the consumer facility. Thus, there is a possibility that feedback control for calculating and transmitting a new amount of electric power to be controlled is performed in order to bring the difference close to 0. Thus, there is a possibility that a delay time for the feedback control can occur.

FIG. 9B is a graph illustrating one example of a result of control in each embodiment described above. In FIG. 9B, the horizontal axis represents time, and the vertical axis represents electric power corresponding to the amount of electric power to be controlled, as in FIG. 9A. The response time of the electric appliance 310 is also regarded as 0. In the group control in each embodiment, the delay time increases, as in FIG. 9B. However, the difference between the target value of the amount of electric power to be controlled and the actual value of the amount of electric power to be controlled decreases. Accordingly, it is not necessary to calculate and transmit a new amount of electric power to be controlled.

This control result is based on the control group generated based on various constrains of each electric appliance 310 (the power storage apparatus, the load apparatus, or the power generation apparatus) installed at the facility of a consumer. The group control apparatus 200 in each embodiment described above can efficiency bring the actual value of the amount of electric power to be controlled close to the target value of the amount of electric power to be controlled, by reducing the control period for the control group in which the amount of controllable electric energy is large.

(Summary and Supplement)

The group control apparatus 200 in each embodiment described above is an apparatus for grouping the electric appliances 310 into a plurality of control groups and controlling the electric power of the electric appliances 310 for each control group in a predetermined electric-power service providing period. Specifically, the group control apparatus 200 includes the characteristics obtainer 201, the amount-of-controllable electric energy calculator 202, and the grouper 203, as described above.

The characteristics obtainer 201 obtains characteristics of each of the electric appliances 310. The amount-of-controllable electric energy calculator 202 calculates an amount of controllable electric energy of each electric appliance 310, based on the characteristics of the electric appliance 310.

The grouper 203 groups the electric appliances 310 into a plurality of control groups and determines, for each of the control groups, a control period at which the electric power of one or more electric appliances 310 included in the control group is periodically controlled in the predetermined electric-power service providing period. In this case, when the amounts of controllable electric energy for a first control group is larger than the amounts of controllable electric energy for a second control group, the grouper 203 sets the control period for the first control group to be shorter than the control period for the second control group.

With this arrangement, since a short control period is assigned to the control group in which the amount of controllable electric energy is large, the electric power can be significantly changed in a short period. Accordingly, the control accuracy improves. Also, since the control period is determined for each control group, the peak amount of communication used for the control is reduced, and the occurrence of a communication failure is suppressed. That is, the group control apparatus 200 can appropriately control the electric power of the electric appliances 310.

For example, the amounts of controllable electric energy for the first control group may be the amounts of controllable electric energy of one or more power storage apparatuses among one or more electric appliances 310 included in the first control group. The amounts of controllable electric energy for the second control group may be the amounts of controllable electric energy of one or more power storage apparatuses among one or more electric appliances 310 included in the second control group.

With this arrangement, a short control period is assigned to the control group in which the amount of controllable electric energy for the power storage apparatuses is large. Since the response time of each power storage apparatus is short, the electric power can be significantly changed in a short period of time. Accordingly, the control accuracy further improves.

Also, for example, by selectively using two calculation expressions that differ from each other between the reduction control and the increase control, the amount-of-controllable electric energy calculator 202 may calculate an amount of controllable electric energy of each electric appliance 310 that is included in the electric appliances 310 and that is to be controlled. The "reduction control" as used herein is control for reducing the electric power to be supplied from the electric power system to the electric appliances 310. The "increase control" as used herein is control for increasing the electric power to be supplied from the electric power system to the electric appliances 310.

With this arrangement, the amount of controllable electric energy corresponding to a case in which the electric power to be received is increased and the amount of controllable electric energy corresponding to a case in which the electric power to be received is reduced are calculated. Based on the amounts of controllable electric energy corresponding to the two cases, the control periods are appropriately determined.

For example, the electric appliance to be controlled may be a power storage apparatus included in the electric appliances 310. The characteristics obtainer 201 may obtain the remaining capacity of the power storage apparatus, the rated output capacity of the power storage apparatus, the available capacity of the power storage apparatus, and the rated input capacity of the power storage apparatus as the characteristics of the power storage apparatus.

The amount-of-controllable electric energy calculator 202 may obtain the minimum value of the remaining capacity, the output rated capacity, and the amount of electric power consumed by a consumer having the power storage apparatus as the amount of controllable electric energy of the power storage apparatus in the reduction control. The amount-of-controllable electric energy calculator 202 may also obtain the minimum value of the available capacity and the rated input capacity as the amount of controllable electric energy of the power storage apparatus in the increase control.

With this arrangement, the amount of controllable electric energy corresponding to a case in which the electric power to be controlled is increased and the amount of controllable electric energy corresponding to a case in which the electric power to be controlled is reduced are appropriately calculated for the power storage apparatus.

In addition, for example, the electric appliance to be controlled may be a load apparatus included in the electric appliances 310. The characteristics obtainer 201 may obtain, as the characteristics of the load apparatus, the amount of electric power consumed by the load apparatus, a first amount of electric power consumption, and a second amount of electric power consumed. The first amount of electric power consumption is a predetermined amount of electric power consumption of the load apparatus and is larger than or equal to the amount of electric power consumed by the load apparatus. The second amount of electric power consumption is a predetermined amount of electric power consumption of the load apparatus and is smaller than or equal to the amount of electric power consumed by the load apparatus.

The amount-of-controllable electric energy calculator 202 may calculate a difference between the amount of electric power consumed by the load apparatus and the second amount of electric power consumption as the amount of controllable electric energy of the load apparatus in the reduction control. The amount-of-controllable electric energy calculator 202 may calculate a difference between the amount of electric power consumed by the load apparatus and the first amount of electric power consumption as the amount of controllable electric energy of the load apparatus in the increase control.

With this arrangement, the amount of controllable electric energy corresponding to a case in which the electric power to be received is increased and the amount of controllable electric energy corresponding to a case in which the electric power to be received is reduced are appropriately calculated for the load apparatus.

For example, the electric appliances 310 include a first power storage apparatus, a second power storage apparatus, a third power storage apparatus, and a fourth power storage apparatus. There is a case in which each of the amount of controllable electric energy of the first power storage apparatus and the amount of controllable electric energy of the second power storage apparatus is larger than the amount of controllable electric energy of the third power storage apparatus and is larger than the amount of controllable electric energy of the fourth power storage apparatus. In such a case, the grouper 203 may group the first power storage apparatus and the second power storage apparatus into one control group and group the third power storage apparatus and the fourth power storage apparatus into another control group.

As a result of the grouping, an imbalance of the amounts of controllable electric energy between the power storage apparatuses is reduced in each control group. Thus, in each control group, an imbalance of the amounts of processing is reduced.

Also, for example, the grouper 203 may group, of the electric appliances 310, all of one consumer's electric appliances 310 into one control group.

With this grouping, instruction values for the electric appliances 310 can be reported together for each consumer. Thus, it is possible to simplify the report processing.

Also, for example, the grouper 203 may group, of the electric appliances 310, load apparatuses of consumers each having only one or more load apparatuses into one control group.

With this arrangement, the electric appliances 310 (the load apparatus) having the same characteristics are grouped together, and an appropriate control period is determined for the electric appliances 310 (the load apparatus) having the same characteristics.

Also, for example, with respect to each of the control groups, the grouper 203 may determine a control start time at which the control on the electric power of one or more electric appliances 310 included in the control group is started. During the determination, when the control period for the first control group is shorter than the control period for the second control group, the grouper 203 may set the control start time for the first control group to be earlier than the control start time for the second control group.

With this arrangement, the electric power for the control group in which the amount of processable electric power is large and the control period is short is controlled earlier. Accordingly, a delay is suppressed, and the control accuracy improves.

Also, for example, with respect to each of the control groups, the grouper 203 may determine a control start time at which the control on the electric power of one or more electric appliances 310 included in the control group is started. During the determination, the grouper 203 may make the control start time for the control group having only one or more load apparatuses among the electric appliances 310 match the start time of the predetermined electric-power service providing period.

With this arrangement, the number of times the power storage apparatuses are controlled is reduced. Accordingly, deterioration of the power storage apparatuses is suppressed.

For example, the group control apparatus 200 may have the excluder 204 for excluding, from the electric appliances 310, the electric appliances 310 whose electric power is not controlled. The grouper 203 may then group the electric appliances 310 from which the electric appliances 310 whose electric power is not controlled are excluded into the control groups.

With this arrangement, each electric appliance 310 whose electric power is not controlled is excluded in the grouping. Accordingly, the amount of processing is reduced.

Also, for example, the excluder 204 may exclude, from the electric appliances 310, each electric appliance 310 whose response time to electric power control is longer than a predetermined response time requested by an electric power service in the predetermined electric-power service providing period.

With this arrangement, each electric appliance 310 whose response time is longer is excluded as the electric appliance 310 whose electric power is not controlled, and the amount of processing is reduced.

Also, for example, the excluder 204 may exclude, from the electric appliances 310, each electric appliance 310 whose amount of controllable electric energy is 0.

With this arrangement, each electric appliance 310 whose amount of controllable electric energy is 0 is excluded as the electric appliance 310 whose electric power is not controlled, and the amount of processing is reduced.

Also, for example, the group control apparatus 200 may have the amount-of-electric-power-control calculator 205 that calculates an amount of electric power to be controlled for each of the electric appliance 310 as an instruction value. The amount-of-electric-power-control calculator 205 may calculate a common amount of electric power to be controlled for the power storage apparatuses included in one control group.

As a result, the calculation processing for the amount of electric power to be controlled is simplified. Similar control may also be executed on the power storage apparatuses included in the control group.

For example, the group control apparatus 200 may further have the reporter 206 for reporting, to each of the electric appliances 310, the amount of electric power to be controlled for the electric appliance 310 at a report time defined by a control period for the control group including the electric appliance 310.

For example, when the report time for a first electric appliance of the electric appliances 310 and the report time for a second electric appliance of the electric appliances 310 are equal to each other, the amount of controllable electric energy of the first electric appliance may be larger than the amount of controllable electric energy of the second electric appliance. When the report time for the first electric appliance of the electric appliances 310 and the report time for the second electric appliance of the electric appliances 310 are equal to each other, the response time to electric power control on the first electric appliance may be shorter than the response time to electric power control on the second electric appliance.

In those cases, the reporter 206 may report the amount of electric power to be controlled for the second electric appliance to the second electric appliance after reporting the amount of electric power to be controlled for the first electric appliance to the first electric appliance.

As a result, the electric power for the electric appliance 310 whose amount of processable electric power is large or the electric appliance 310 whose response time is short is controlled earlier. Accordingly, a delay is suppressed, and the control accuracy improves.

Also, for example, there is a case in which the report time for the first control group and the report time for the second control group are equal to each other and the amounts of controllable electric energy for the first control group is larger than the amounts of controllable electric energy for the second control group. In this case, the report time for the first control group is a report time defined by the control period for the first control group. The report time for the second control group is a report time defined by the control period for the second control group.

In this case, the reporter 206 may report, to each of one or more electric appliances 310 included in the first control group, the amount of electric power to be controlled for the electric power of the electric appliance 310. Subsequently, the reporter 206 may report, to each of one or more electric appliances 310 included in the second control group, the amount of electric power to be controlled for the electric appliance 310.

As a result, the electric power for the control group in which the amount of processable electric power is large is controlled earlier. Accordingly, a delay is suppressed, and the control accuracy improves.

In addition, in the embodiments described above, a plurality of control groups are configured before the control in the predetermined electric-power service providing period is performed. However, there is a possibility that the amount of controllable electric energy varies in the predetermined electric-power service providing period. Accordingly, in the predetermined electric-power service providing period, the group control apparatus 200 may reconfigure the control groups. For example, the grouper 203 may periodically reconfigure the control groups.

The grouper 203 may also classify one electric appliance 310 into each of the control groups.

In the embodiments described above, the individual constituent elements may be constituted by dedicated hardware or may be realized by executing a software program suitable for the constituent elements. A program executor, such as a central processing unit (CPU) or a processor, may read and execute a software program recorded in a recording medium, such as a hard disk or a semiconductor memory, to thereby realize the constituent elements. In this case, the software for realizing the group control apparatus 200 in each embodiment described above is a program as described below.

That is, this program causes a computer to execute a group control method for grouping a plurality of electric appliances into a plurality of control groups and controlling electric power of the electric appliances for each control group in a predetermined electric-power service providing period. The method includes: obtaining characteristics of each of the electric appliances; calculating an amount of controllable electric energy of each of the electric appliances, based on the characteristics of the electric appliance; and grouping the electric appliances into the control groups and determining, for each of the control groups, a control period at which the electric power of one or more electric appliances included in the control group is periodically controlled in the predetermined electric-power service providing period. In the grouping of the electric appliances, when an amounts of controllable electric energy for a first control group of the control groups is larger than an amounts of controllable electric energy for a second control group of the control groups, the control period for the first control group is set to be shorter than the control period for the second control group.

The constituent elements included in the group control apparatus 200 and so on may also be implemented by circuits. These circuits may be configured as a single circuit as a whole or may be circuits that are independent from each other. These circuits may be general circuits or dedicated circuits.

Although the group control apparatus 200 and so on according to one or more aspects have been described above on the basis of the embodiments, the present disclosure is not limited to the embodiments. Modes obtained by applying various modifications conceived by those skilled in the art to the embodiments or modes constituted by combining the constituent elements in different embodiments may also be encompassed by the scope of one or more modes, as long as such modes do not depart from the spirit and scope of the present disclosure.

For example, in the embodiments described above, a process executed by a particular constituent element may be executed by another constituent element instead of the particular constituent element. In addition, the order of processes may be changed, or processes may be executed in parallel.

The present disclosure can be applied to a group control apparatus for controlling the electric power of a plurality of electric appliances for each group and can be applied to electric-power control systems, consumer installation control systems, power-storage-apparatus management systems, load-apparatus management systems, power-generation-apparatus management systems, and so on.

## Claims

1.  A group control method for grouping electric appliances (310) into control groups and controlling electric power of the electric appliances (310) for each control group in a predetermined control period, the method comprising:

    obtaining (S101, S201) characteristics of each of the electric appliances (310);
    calculating (S102, S202) an amount of controllable electric energy of each of the electric appliances (310), based on the characteristics of the electric appliance (310), the amount of controllable electric energy being an amount of energy to be used in control for increasing or decreasing electric power to be supplied from an electric power system,
    grouping (S104, S205) the electric appliances (310) into the control groups; and
    determining (S105, S106, S206, S207), for each of the control groups, a control period at which the electric power of one or more electric appliances (310) included in the control group is periodically controlled,
    wherein, in the determining (S105, S106, S026, S207), when a total of amounts of controllable electric energy for a first control group of the control groups is larger than a total of amounts of controllable electric energy for a second control group of the control groups, the control period for the first control group is set to be shorter than the control period for the second control group.

2.  The group control method according to claim 1,
    wherein the total of amounts of controllable electric energy for the first control group is a total of amounts of controllable electric energy of one or more power storage apparatuses among one or more electric appliances (310) included in the first control group; and
    wherein the total of amounts of controllable electric energy for the second control group is a total of amounts of controllable electric energy of one or more power storage apparatuses among one or more electric appliances (310) included in the second control group.

3.  The group control method according to claim 1,
    wherein, two calculation expressions that differ from each other between reduction control that is control for reducing electric power to be supplied from the electric power system to the electric appliances (310) and increase control that is control for increasing electric power to be supplied from the electric power system to the electric appliances (310) are selectively used to calculate (S102, S202) the amount of controllable electric energy of each electric appliance (310) that is included in the electric appliances (310) and that is to be controlled.

4. The group control method according to claim 3,
wherein, when the electric appliance (310) to be controlled is a power storage apparatus included in the electric appliances (310),
a remaining capacity of the power storage apparatus, a rated output capacity of the power storage apparatus, an available capacity of the power storage apparatus, and a rated input capacity of the power storage apparatus are obtained (S101, 201) as the characteristics of the power storage apparatus,
a minimum value of the remaining capacity, the output rated capacity, and an amount of electric power consumed by a consumer having the power storage apparatus is calculated (S102, S202) as the amount of controllable electric energy of the power storage apparatus in the reduction control, and
a minimum value of the available capacity and the rated input capacity is calculated (S102, S202) as the amount of controllable electric energy of the power storage apparatus in the increase control.

5. The group control method according to claim 3,
wherein, when the electric appliance (310) to be controlled is a load apparatus included in the electric appliances (310),
an amount of electric power consumed by the load apparatus, a first amount of electric power consumption, and a second amount of electric power consumption are obtained (8101, S201) as the characteristics of the load apparatus,
the first amount of electric power consumption being a predetermined amount of electric power consumption of the load apparatus and being larger than or equal to the amount of electric power consumed by the load apparatus, and the second amount of electric power consumption being a predetermined amount of electric power consumption of the load apparatus and being smaller than or equal to the amount of electric power consumed by the load apparatus,
a difference between the amount of electric power consumed by the load apparatus and the second amount of electric power consumption is calculated (S102, S202) as the amount of controllable electric energy of the load apparatus in the reduction control, and
a difference between the amount of electric power consumed by the load apparatus and the first amount of electric power consumption is calculated (S102, S202) as the amount of controllable electric energy of the load apparatus in the increase control.

6. The group control method according to claim 1,
wherein the electric appliances (310) include a first power storage apparatus, a second power storage apparatus, a third power storage apparatus, and a fourth power storage apparatus; and
wherein, when each of the amount of controllable electric energy of the first power storage apparatus and the amount of controllable electric energy of the second power storage apparatus is larger than the amount of controllable electric energy of the third power storage apparatus and is larger than the amount of controllable electric energy of the fourth power storage apparatus, the first power storage apparatus and the second power storage apparatus are grouped (S104, S205) into one control group, and the third power storage apparatus and the fourth power storage apparatus are grouped (S104, S205) into another control group.

7. The group control method according to claim 1,
wherein all of one consumer's electric appliances (310) are grouped (S104, S205) into one control group.

8. The group control method according to claim 1,
wherein load apparatuses of consumers each having only one or more load apparatuses are grouped (S104, S205) into one control group.

9. The group control method according to claim 1,
wherein a control start time at which control on the electric power of one or more electric appliances (310) included in the control group is started is determined (S106, S207) with respect to each of the control groups, and
when the control period for the first control group is shorter than the control period for the second control group, the control start time for the first control group is set to be earlier than the control start time for the second control group.

10. The group control method according to claim 1,
wherein a control start time at which control on the electric power of one or more electric appliances (310) included in the control group is started is determined (S106, S207) with respect to each of the control groups, and
the control start time for the control group including only one or more load apparatuses among the electric appliances (310) is made to match a start time of the predetermined electric-power service providing period.

11. The group control method according to claim 1, further comprising:

excluding (S204), from the electric appliances (310), each electric appliance (310) whose electric power is not controlled,
wherein the electric appliances (310) from which each electric appliance (310) whose electric power is not controlled is excluded are grouped (S205) into the control groups.

12. The group control method according to claim 11,
wherein each electric appliance (310) excluded (S204) from the electric appliances (310) is an electric appliance (310) whose response time to electric power control is longer than a predetermined response time requested by an electric power service in the predetermined electric-power service providing period.

13. The group control method according to claim 11,
wherein each electric appliance (310) excluded (S204) from the electric appliances (310) is an electric appliance (310) whose amount of controllable electric energy is 0.

14. The group control method according to claim 1, further comprising:

calculating (S205), with respect to each of the electric appliances (310), the amount of electric power to be controlled for the electric appliance (310) as an instruction value,
wherein a common amount of electric power to be controlled is calculated (S304) for the power storage apparatuses included in one control group.

15. A group control apparatus (200) for grouping electric appliances (310) into control groups and controlling electric power of the electric appliances (310) for each control group in a predetermined control period, the apparatus comprising:

an obtainer (201) that obtains characteristics of each of the electric appliances (310);
a calculator (S202) that calculates an amount of controllable electric energy of each of the electric appliances (310), based on the characteristics of the electric appliance (310), the amount of controllable electric energy being an amount of energy to be used in control for increasing or decreasing electric power to be supplied from an electric power system;
a grouper (S203) that groups the electric appliances (310) into the control groups; and
a determiner (S203) that determines, for each of the control groups, a control period at which the electric power of one or more electric appliances (310) included in the control group is periodically controlled,
wherein, when a total of amounts of controllable electric energy for a first control group of the control groups is larger than a total of amounts of controllable electric energy for a second control group of the control groups, the grouper (S203) sets the control period for the first control group to be shorter than the control period for the second control group.

**Patentansprüche**

1. Gruppensteuerverfahren zum Gruppieren von elektrischen Geräten (310) in Steuergruppen und zum Steuern elektrischer Leistung der elektrischen Geräte (310) für jede Steuergruppe in einer vorbestimmten Steuerperiode, wobei das Verfahren umfasst:

Erhalten (S101, S201) von Charakteristiken eines jeden der elektrischen Geräte (310),
Berechnen (S102, S202) eines Ausmaßes an steuerbarer elektrischer Energie für jedes der elektrischen Geräte (310) auf Basis der Charakteristiken des elektrischen Geräts (310), wobei das Ausmaß an steuerbarer elektrischer Energie ein Ausmaß an Energie ist, das in einer Steuerung zum Erhöhen oder Verringern einer elektrischen Leistung zu verwenden ist, die von einem elektrischen Leistungssystem zugeführt wird,
Gruppieren (S104, S205) der elektrischen Geräte (310) in die Steuergruppen, und
Bestimmen (S105, S106, S206, S207) einer Steuerperiode für jede der Steuergruppen, mit der die elektrische Leistung von einem oder mehreren elektrischen Geräten (310), die in der Steuergruppe enthalten sind, periodisch gesteuert wird,

wobei bei dem Bestimmen (S105, S106, S206, S207) die Steuerperiode für eine erste Steuergruppe kürzer als die Steuerperiode für eine zweite Steuergruppe eingestellt wird, wenn eine Summe von Ausmaßen an steuerbarer elektrischer Energie für die erste Steuergruppe der Steuergruppen größer als eine Summe von Ausmaßen von steuerbarer elektrischer Energie für die zweite Steuergruppe der Steuergruppen ist.

2. Gruppensteuerverfahren nach Anspruch 1,
wobei die Summe von Ausmaßen an steuerbarer elektrischer Energie für die erste Steuergruppe eine Summe von Ausmaßen von steuerbarer elektrischer Energie von einem oder mehreren Leistungsspeichervorrichtungen unter einem oder mehreren elektrischen Geräten (310) ist, die in der ersten Steuergruppe enthalten sind, und
wobei die Summe von Ausmaßen an steuerbarer elektrischer Energie für die zweite Steuergruppe eine Summe von Ausmaßen an steuerbarer elektrischer Energie von einer oder mehreren Leistungsspeichervorrichtungen unter einem oder mehreren elektrischen Geräten (310) ist, die in der zweiten Steuergruppe enthalten sind.

3. Gruppensteuerverfahren nach Anspruch 1,
wobei zwei Berechnungsausdrücke, die sich voneinander zwischen einer Reduktionssteuerung, die eine Steuerung zum Reduzieren einer elektrischen Leistung ist, die von dem elektrischen Leistungssystem den elektrischen Geräten (310) zuzuführen ist, und einer Erhöhungssteuerung unterscheiden, die eine Steuerung zum Erhöhen einer elektrischen Leistung ist, die von dem elektrischen Leistungssystem den elektrischen Geräten (310) zuzuführen ist, wahlweise verwendet werden, um das Ausmaß an steuerbarer elektrischer Energie für jedes elektrische Gerät (310) zu berechnen (S102, S202), das in den elektrischen Geräten (310) enthalten ist, und die zu steuern ist.

4. Gruppensteuerverfahren nach Anspruch 3,
wobei, wenn das elektrische Gerät (310), das zu steuern ist, eine Leistungsspeichervorrichtung ist, die in den elektrischen Geräten (310) enthalten ist,
eine verbleibende Kapazität der Leistungsspeichervorrichtung, eine Nennausgabekapazität der Leistungsspeichervorrichtung, eine verfügbare Kapazität der Leistungsspeichervorrichtung und eine Nenneingabekapazität der Leistungsspeichervorrichtung als die Charakteristiken der Leistungsspeichervorrichtung erhalten (S101, S201) werden, ein Minimalwert der verbleibenden Kapazität, die Nennausgabekapazität und ein Ausmaß an elektrischer Leistung, das durch einen Verbraucher mit der Leistungsspeichervorrichtung verbraucht wird, als das Ausmaß an steuerbarer Energie der Leistungsspeichervorrichtung in der Reduktionssteuerung berechnet (S102, S202) wird, und
ein Minimalwert der verfügbaren Kapazität und die Nenneingabekapazität als das Ausmaß an steuerbarer elektrischer Energie der Leistungsspeichervorrichtung in der Erhöhungssteuerung berechnet (S102, S202) wird.

5. Gruppensteuerverfahren nach Anspruch 3,
wobei, wenn das elektrische Gerät (310), das zu steuern ist, eine Lastvorrichtung ist, die in den elektrischen Geräten (310) enthalten ist,
ein Ausmaß an elektrischer Leistung, das durch die Lastvorrichtung verbraucht wird, ein erstes Ausmaß an elektrischem Leistungsverbrauch und ein zweites Ausmaß an elektrischem Leistungsverbrauch als die Charakteristiken der Lastvorrichtungen erhalten werden (S101, S201), wobei das erste Ausmaß an elektrischem Leistungsverbrauch ein vorbestimmtes Ausmaß an elektrischem Leistungsverbrauch der Lastvorrichtung und größer als oder gleich dem Ausmaß an elektrischer Leistung ist, das durch die Lastvorrichtung verbraucht wird, und das zweite Ausmaß an elektrischem Leistungsverbrauch ein vorbestimmtes Ausmaß an elektrischem Leistungsverbrauch der Lastvorrichtung und kleiner als oder gleich dem Ausmaß an elektrischer Leistung ist, das durch die Lastvorrichtung verbraucht wird,
eine Differenz zwischen dem Ausmaß der elektrischen Leistung, die durch die Lastvorrichtung verbraucht wird, und dem zweiten Ausmaß an elektrischem Leistungsverbrauch als das Ausmaß an steuerbarer elektrischer Energie der Lastvorrichtung in der Reduktionssteuerung berechnet (S102, S202) wird, und
eine Differenz zwischen dem Ausmaß an elektrischer Leistung, das durch die Lastvorrichtung verbraucht wird, und dem ersten Ausmaß an elektrischem Leistungsverbrauch als das Ausmaß an steuerbarer elektrischer Energie der Lastvorrichtung in der Erhöhungssteuerung berechnet (S102, S202) wird.

6. Gruppensteuerverfahren nach Anspruch 1,
wobei die elektrischen Geräte (310) eine erste Leistungsspeichervorrichtung, eine zweite Leistungsspeichervorrichtung, eine dritte Leistungsspeichervorrichtung und eine vierte Leistungsspeichervorrichtung umfassen, und
wobei, wenn das Ausmaß an steuerbarer elektrischer Energie der ersten Leistungsspeichervorrichtung und das Ausmaß an steuerbarer elektrischer Energie der zweiten Leistungsspeichervorrichtung jeweils größer als das Ausmaß an steuerbarer elektrischer Energie der dritten Leistungsspeichervorrichtung und größer als das Ausmaß an steuerbarer elektrischer Energie der vierten Leistungsspeichervorrichtung sind, die erste Leistungsspeichervorrichtung und die zweite Leistungsspeichervorrichtung in einer Steuergruppe gruppiert (S104, S205) und die dritte Leistungsspeichervorrichtung und die vierte Leistungsspeichervorrichtung in einer anderen Steuergruppe gruppiert (S104, S205) werden.

7. Gruppensteuerverfahren nach Anspruch 1,
wobei alle elektrischen Geräte (310) eines Verbrauchers in einer Steuergruppe gruppiert (S104, S205) werden.

8. Gruppensteuerverfahren nach Anspruch 1,
wobei Lastvorrichtungen von Verbrauchern, die jeweils lediglich eine oder mehrere Lastvorrichtungen aufweisen, in einer Steuergruppe gruppiert (S104, S205) werden.

9. Gruppensteuerverfahren nach Anspruch 1,
wobei eine Steuerstartzeit, zu der eine Steuerung der elektrischen Leistung von einem oder mehreren elektrischen Geräten (310), die in der Steuergruppe enthalten sind, begonnen wird, hinsichtlich jeder der Steuergruppen bestimmt (S106, S207) wird und,
wenn die Steuerperiode für die erste Steuergruppe kürzer als die Steuerperiode für die zweite Gruppe ist, die Steuerstartzeit für die erste Steuergruppe früher eingestellt wird als die Steuerstartzeit für die zweite Steuergruppe.

10. Gruppensteuerverfahren nach Anspruch 1,
wobei eine Steuerstartzeit, zu der eine Steuerung der elektrischen Leistung von einem oder mehreren elektrischen Geräten (310), die in der Steuergruppe enthalten sind, begonnen wird, hinsichtlich jeder der Steuergruppen bestimmt (S106, S207) wird, und
die Steuerstartzeit für die Steuergruppe, die lediglich eine oder mehrere Lastvorrichtungen unter den elektrischen Geräten (310) aufweist, so eingestellt wird, dass sie zu einer Startzeit der vorbestimmten elektrischen Leistungsdienstbereitstellungsperiode passt.

11. Gruppensteuerverfahren nach Anspruch 1, ferner mit:

Ausschließen (S204) eines jeden elektrischen Geräts (310) aus den elektrischen Geräten (310), dessen elektrische Leistung nicht gesteuert wird,
wobei die elektrischen Geräte (310), von denen jedes elektrische Gerät (310), dessen elektrische Leistung nicht gesteuert wird, ausgeschlossen ist, in die Steuergruppen gruppiert (S205) werden.

12. Gruppensteuerverfahren nach Anspruch 11,
wobei jedes elektrische Gerät (310), das aus den elektrischen Geräten (310) ausgeschlossen ist (S204), ein elektrisches Gerät (310) ist, dessen Antwortzeit auf eine elektrische Leistungssteuerung länger als eine vorbestimmte Antwortzeit ist, die durch einen elektrischen Leistungsdienst in der vorbestimmten elektrischen Leistungsdienstbereitstellungsperiode angefordert wird.

13. Gruppensteuerverfahren nach Anspruch 11,
wobei jedes elektrische Gerät (310), das aus den elektrischen Geräten (310) ausgeschlossen (S204) ist, ein elektrisches Gerät (310) ist, dessen Ausmaß an steuerbarer elektrischer Energie 0 beträgt.

14. Gruppensteuerverfahren nach Anspruch 1, ferner mit:

Berechnen (S205) des Ausmaßes an zu steuernder elektrischer Leistung für das elektrische Gerät (310) als einem Instruktionswert hinsichtlich eines jeden der elektrischen Geräte (310),
wobei ein gemeinsames Ausmaß an zu steuernder elektrischer Leistung für die Leistungsspeichervorrichtungen berechnet wird (S304), die in einer Steuergruppe enthalten sind.

15. Gruppensteuervorrichtung (200) zum Gruppieren von elektrischen Geräten (310) in Steuergruppen und zum Steuern elektrischer Leistung der elektrischen Geräte (310) für jede Steuergruppe in einer vorbestimmten Steuerperiode, wobei die Vorrichtung umfasst:

einen Erhalter (201), der Charakteristiken eines jeden der elektrischen Geräte (310) erhält,
einen Berechner (S202), der ein Ausmaß an steuerbarer elektrischer Energie für jedes der elektrischen Geräte (310) auf Basis der Charakteristiken des elektrischen Geräts (310) berechnet, wobei das Ausmaß an steuerbarer elektrischer Energie ein Ausmaß an Energie ist, das in einer Steuerung zum Erhöhen oder Verringern einer elektrischen Leistung zu verwenden ist, die von einem elektrischen Leistungssystem zugeführt wird,

einen Gruppierer (S203), der die elektrischen Geräte (310) in die Steuergruppen gruppiert, und

einen Bestimmer (S203), der eine Steuerperiode für jede der Steuergruppen bestimmt, mit der die elektrische Leistung von einem oder mehreren elektrischen Geräten (310), die in der Steuergruppe enthalten sind, periodisch gesteuert wird,

wobei der Gruppierer (S203) die Steuerperiode für eine erste Steuergruppe kürzer als die Steuerperiode für eine zweite Steuergruppe einstellt, wenn eine Summe von Ausmaßen an steuerbarer elektrischer Energie für die erste Steuergruppe der Steuergruppen größer als eine Summe von Ausmaßen von steuerbarer elektrischer Energie für die zweite Steuergruppe der Steuergruppen ist.

## Revendications

1. Procédé de commande de groupe pour regrouper des appareils électriques (310) en groupes de commande et pour commander de la puissance électrique des appareils électriques (310) pour chaque groupe de commande dans une période de commande prédéterminée, le procédé comprenant:

   obtenir (S101, S201) des caractéristiques de chacun des appareils électriques (310),
   calculer (S102, S202) une quantité d'énergie électrique commandable pour chacun des appareils électriques (310) sur la base des caractéristiques de l'appareil électrique (310), dans lequel la quantité d'énergie électrique commandable est une quantité d'énergie à utiliser dans une commande pour augmenter ou réduire une puissance électrique à fournir à partir d'un système de puissance électrique,
   regrouper (S104, S205) les appareils électriques (310) en groupes de commande, et
   déterminer (S105, S106, S206, S207), pour chacun des groupes de commande, une période de commande à laquelle la puissance électrique d'un ou de plusieurs appareils électriques (310) inclus dans le groupe de commande est commandée périodiquement,
   dans lequel, lors de la détermination (S105, S106, S206, S207), la période de commande pour un premier groupe de commande est réglée de manière à être plus courte que la période de commande pour un deuxième groupe de commande, lorsqu'une somme de quantités d'énergie électrique commandable pour le premier groupe de commande des groupes de commande est supérieure à une somme de quantités d'énergie électrique commandable pour le deuxième groupe de commande des groupes de commande.

2. Procédé de commande de groupe selon la revendication 1,
   dans lequel la somme de quantités d'énergie électrique commandable pour le premier groupe de commande est une somme de quantités d'énergie électrique commandable d'un ou de plusieurs dispositifs de stockage de puissance parmi un ou plusieurs appareils électriques (310) inclus dans le premier groupe de commande, et
   dans lequel la somme de quantités d'énergie électrique commandable pour le deuxième groupe de commande est une somme de quantités d'énergie électrique commandable d'un ou de plusieurs dispositifs de stockage de puissance parmi un ou plusieurs appareils électriques (310) inclus dans le deuxième groupe de commande.

3. Procédé de commande de groupe selon la revendication 1,
   dans lequel deux expressions de calcul qui diffèrent l'une de l'autre entre une commande de réduction qui est une commande pour réduire une puissance électrique à fournir à partir du système de puissance électrique aux appareils électriques (310) et une commande d'augmentation qui est une commande pour augmenter une puissance électrique à fournir à partir du système de puissance électrique aux appareils électriques (310) sont utilisées sélectivement pour calculer (S102, S202) la quantité d'énergie électrique commandable pour chaque appareil électrique (310) qui est inclus dans les appareils électriques (310), et qui est à commander.

4. Procédé de commande de groupe selon la revendication 3,
   dans lequel, lorsque l'appareil électrique (310) à commander est un dispositif de stockage de puissance inclus dans les appareils électriques (310),
   une capacité restante du dispositif de stockage de puissance, une capacité de sortie nominale du dispositif de stockage de puissance, une capacité disponible du dispositif de stockage de puissance et une capacité d'entrée nominale du dispositif de stockage de puissance sont obtenues (S101, S201) en tant que caractéristiques du dispositif de stockage de puissance,
   une valeur minimale de la capacité restante, la capacité de sortie nominale et une quantité de puissance électrique consommée par un consommateur ayant le dispositif de stockage de puissance est calculée (S102, S202) comme la quantité d'énergie électrique commandable du dispositif de stockage de puissance dans le commande de réduction, et
une valeur minimale de la capacité disponible et la capacité d'entrée nominale est calculée (S102, S202) comme la quantité d'énergie électrique commandable du dispositif de stockage de puissance dans la commande d'augmentation.

5. Procédé de commande de groupe selon la revendication 3,
dans lequel, lorsque l'appareil électrique (310) à commander est un dispositif de charge inclus dans les appareils électriques (310),
une quantité de puissance électrique consommée par ledit dispositif de charge, une première quantité de consommation de puissance électrique et une deuxième quantité de consommation de puissance électrique sont obtenues (S101, S201) en tant que caractéristiques du dispositif de charge, la première quantité de consommation de puissance électrique étant une quantité prédéterminée de consommation de puissance électrique du dispositif de charge et étant supérieure ou égale à la quantité de puissance électrique consommée par le dispositif de charge, et la deuxième quantité de consommation de puissance électrique étant une quantité prédéterminée de consommation de puissance électrique du dispositif de charge et étant inférieure ou égale à la quantité de puissance électrique consommée par le dispositif de charge,
une différence entre la quantité de puissance électrique consommée par le dispositif de charge et la deuxième quantité de consommation de puissance électrique est calculée (S102, S202) comme la quantité d'énergie électrique commandable du dispositif de charge dans la commande de réduction, et
une différence entre la quantité de puissance électrique consommée par le dispositif de charge et la première quantité de consommation de puissance électrique est calculée (S102, S202) comme la quantité d'énergie électrique commandable du dispositif de charge dans la commande d'augmentation.

6. Procédé de commande de groupe selon la revendication 1,
dans lequel les appareils électriques (310) comprennent un premier dispositif de stockage de puissance, un deuxième dispositif de stockage de puissance, un troisième dispositif de stockage de puissance et un quatrième dispositif de stockage de puissance, et
dans lequel, lorsque la quantité d'énergie électrique commandable du premier dispositif de stockage de puissance et la quantité d'énergie électrique commandable du deuxième dispositif de stockage de puissance sont chacune supérieures à la quantité d'énergie électrique commandable du troisième dispositif de stockage de puissance et supérieures à la quantité d'énergie électrique commandable du quatrième dispositif de stockage de puissance, les premier dispositif de stockage de puissance et deuxième dispositif de stockage de puissance sont regroupés (S104, S205) en un groupe de commande et les troisième dispositif de stockage de puissance et quatrième dispositif de stockage de puissance sont regroupés (S104, S205) en un autre groupe de commande.

7. Procédé de commande de groupe selon la revendication 1,
dans lequel tous les appareils électriques (310) d'un consommateur sont regroupés (S104, S205) en un groupe de commande.

8. Procédé de commande de groupe selon la revendication 1,
dans lequel les dispositifs de charge de consommateurs ayant chacun seulement un ou plusieurs dispositifs de charge sont regroupés (S104, S205) en un groupe de commande.

9. Procédé de commande de groupe selon la revendication 1,
dans lequel un temps de démarrage de commande où une commande de la puissance électrique d'un ou de plusieurs appareils électriques (310) inclus dans le groupe de commande est démarrée est déterminé (S106, S207) par rapport à chacun des groupes de commande, et,
lorsque la période de commande pour le premier groupe de commande est plus courte que la période de commande pour le deuxième groupe de commande, le temps de démarrage de commande pour le premier groupe de commande est défini comme ayant lieu plus tôt que le temps de démarrage de commande pour le deuxième groupe de commande.

10. Procédé de commande de groupe selon la revendication 1,
dans lequel un temps de démarrage de commande où une commande de la puissance électrique d'un ou de plusieurs appareils électriques (310) inclus dans le groupe de commande est démarrée est déterminé (S106, S207) par rapport à chacun des groupes de commande, et
le temps de démarrage de commande pour le groupe de commande comprenant seulement un ou plusieurs dispositifs de charge parmi les appareils électriques (310) est défini de manière à correspondre à un temps de démarrage de la période prédéterminée de fourniture de service de puissance électrique.

11. Procédé de commande de groupe selon la revendication 1, comprenant en outre:

exclure (S204) chaque appareil électrique (310) des appareils électriques (310), dont la puissance électrique n'est pas commandée,
dans lequel les appareils électriques (310) desquels est exclu chaque appareil électrique (310) dont la puissance électrique n'est pas commandée sont regroupés (S205) dans les groupes de commande.

12. Procédé de commande de groupe selon la revendication 11,
dans lequel chaque appareil électrique (310) qui est exclu (S204) des appareils électriques (310) est un appareil électrique (310) dont le temps de réponse à une commande de puissance électrique est plus long qu'un temps de réponse prédéterminé demandé par un service de puissance électrique dans la période prédéterminée de fourniture de service de puissance électrique.

13. Procédé de commande de groupe selon la revendication 11,
dans lequel chaque appareil électrique (310) qui est exclu (S204) des appareils électriques (310) est un appareil électrique (310) dont la quantité d'énergie électrique commandable est 0.

14. Procédé de commande de groupe selon la revendication 1, comprenant en outre:

calculer (S205) la quantité de puissance électrique à commander pour l'appareil électrique (310) en tant que valeur d'instruction par rapport à chacun des appareils électriques (310),
dans lequel une quantité commune de puissance électrique à commander est calculée (S304) pour les dispositifs de stockage de puissance inclus dans un groupe de commande.

15. Dispositif de commande de groupe (200) pour regrouper des appareils électriques (310) en groupes de commande et pour commander de la puissance électrique des appareils électriques (310) pour chaque groupe de commande dans une période de commande prédéterminée, le dispositif comprenant:

un obtenteur (201) qui obtient des caractéristiques de chacun des appareils électriques (310),
un calculateur (S202) qui calcule une quantité d'énergie électrique commandable pour chacun des appareils électriques (310) sur la base des caractéristiques de l'appareil électrique (310), dans lequel la quantité d'énergie électrique commandable est une quantité d'énergie à utiliser dans une commande pour augmenter ou réduire une puissance électrique à fournir à partir d'un système de puissance électrique,
un regroupeur (S203) qui regroupe les appareils électriques (310) en groupes de commande, et
un déterminateur (S203) qui détermine, pour chacun des groupes de commande, une période de commande à laquelle la puissance électrique d'un ou de plusieurs appareils électriques (310) inclus dans le groupe de commande est commandée périodiquement,
dans lequel ledit regroupeur (S203) règle la période de commande pour un premier groupe de commande de manière à être plus courte que la période de commande pour un deuxième groupe de commande, lorsqu'une somme de quantités d'énergie électrique commandable pour le premier groupe de commande des groupes de commande est supérieure à une somme de quantités d'énergie électrique commandable pour le deuxième groupe de commande des groupes de commande.

# FIG. 1

# FIG. 2

# FIG. 3

START

OBTAIN CHARACTERISTICS — S101

CALCULATE AMOUNT OF
CONTROLLABLE ELECTRIC ENERGY — S102

HAVE
DETERMINATIONS BEEN
COMPLETED ON ALL ELECTRIC
APPLIANCES? — S103

NO

YES

GROUP ELECTRIC APPLIANCES
INTO CONTROL GROUPS — S104

DETERMINE CONTROL INTERVAL — S105

DETERMINE CONTROL START TIME — S106

END

# FIG. 4

| CONTROL GROUP (IDENTIFICATION NUMBER) | AMOUNT OF CONTROLLABLE ELECTRIC ENERGY (AGGREGATE VALUE) | CONTROL INTERVAL | CONTROL START TIME | NUMBER OF ELECTRIC APPLIANCES | TYPE OF ELECTRIC APPLIANCE |
|---|---|---|---|---|---|
| 1 | 120 | 10 | 10:05 | 100 | POWER STORAGE APPARATUS |
| 2 | 100 | 15 | 10:10 | 100 | POWER STORAGE APPARATUS |
| 3 | 120 | 10 | 10:05 | 150 | POWER STORAGE APPARATUS, LOAD APPARATUS |
| 4 | 80 | 30 | 10:00 | 200 | LOAD APPARATUS |

EP 3 133 708 B1

# FIG. 5

GROUP CONTROL APPARATUS — 200

AMOUNT-OF-CONTROLLABLE-ELECTRIC-ENERGY CALCULATOR — 202

CHARACTERISTICS OBTAINER — 201

EXCLUDER — 204

GROUPER — 203

AMOUNT-OF-ELECTRIC-POWER-CONTROL CALCULATOR — 205

REPORTER — 206

# FIG. 6

START

↓

OBTAIN CHARACTERISTICS — S201

↓

CALCULATE AMOUNT OF
CONTROLLABLE ELECTRIC ENERGY — S202

↓

HAVE
DETERMINATIONS BEEN
COMPLETED ON ALL ELECTRIC
APPLIANCES? — S203    NO →

↓ YES

EXCLUDE ELECTRIC APPLIANCES WHOSE
ELECTRIC POWER IS NOT CONTROLLED — S204

↓

GROUP ELECTRIC APPLIANCES
INTO CONTROL GROUPS — S205

↓

DETERMINE CONTROL INTERVAL — S206

↓

DETERMINE CONTROL START TIME — S207

↓

CALCULATE AMOUNT OF ELECTRIC
POWER TO BE CONTROLLED — S208

↓

END

# FIG. 7

```
                    ┌─────────┐
                    │  START  │
                    └────┬────┘
                         │
                         ▼                    ┌─S301
              ╱ IS START TIME ╲         NO
             ╱ OF ELECTRIC-POWER SERVICE ╲──────┐
             ╲ PROVIDING PERIOD ╱               │
              ╲ REACHED? ╱                      │
                   │ YES                        │
                   ▼                            │
    ┌──────────────────────────────┐  ┌─S302    │
    │  CALCULATE TOTAL AMOUNT OF    │◄─┐         │
    │ ELECTRIC POWER TO BE CONTROLLED│          │
    └───────────────┬──────────────┘            │
                    ▼                           │
    ┌──────────────────────────────┐  ┌─S303    │
    │     SELECT CONTROL GROUP      │            │
    └───────────────┬──────────────┘            │
                    ▼                           │
    ┌──────────────────────────────┐  ┌─S304    │
    │ CALCULATE AMOUNT OF ELECTRIC POWER│        │
    │ TO BE CONTROLLED FOR EACH CONTROL GROUP│   │
    └───────────────┬──────────────┘            │
                    ▼                           │
    ┌──────────────────────────────┐  ┌─S305    │
    │ CALCULATE AMOUNT OF ELECTRIC POWER TO BE│  │
    │ CONTROLLED FOR EACH ELECTRIC APPLIANCE│    │
    └───────────────┬──────────────┘            │
                    ▼                           │
    ┌──────────────────────────────┐  ┌─S306    │
    │    REPORT AMOUNT OF ELECTRIC  │            │
    │    POWER TO BE CONTROLLED     │            │
    └───────────────┬──────────────┘            │
                    ▼                 ┌─S307     │
              ╱ IS END TIME ╲    NO             │
             ╱ OF ELECTRIC-POWER SERVICE ╲──────┘
             ╲ PROVIDING PERIOD ╱
              ╲ REACHED? ╱
                   │ YES
                   ▼
              ┌─────────┐
              │   END   │
              └─────────┘
```

# FIG. 8

## FIG. 9A

AMOUNT OF ELECTRIC POWER TO BE CONTROLLED

TARGET VALUE

DIFFERENCE

ACTUAL VALUE

DELAY

TIME

## FIG. 9B

AMOUNT OF ELECTRIC POWER TO BE CONTROLLED

TARGET VALUE

ACTUAL VALUE

DELAY

TIME

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013176284 A